# EUROPEAN PATENT APPLICATION

(11) **EP 4 503 660 A1**
(43) Date of publication of application: **05.02.2025**
(21) Application number: 22934295.1
(22) Date of filing: 31.03.2022
(51) Int. Cl.: H04W 4/029

(54) **METHOD FOR DETERMINING MULTI-CARRIER FREQUENCY CARRIER PHASE POSITIONING CAPABILITY AND APPARATUS**

(71) Applicant: Beijing Xiaomi Mobile Software Co., Ltd., Beijing 100085 (CN)
(72) Inventor: LI, Mingju, Beijing 100085 (CN)
(74) Representative: Stöckeler, Ferdinand
(86) International application number: PCT/CN2022/084698
(87) International publication number: WO 2023/184458

(57) **Abstract**

Disclosed in embodiments of the present disclosure are a method for determining multi-carrier frequency carrier phase positioning capability and an apparatus. The method comprises: a terminal device sends positioning capability information to a network side device, wherein the positioning capability information is used for indicating capability information of multi-carrier frequency positioning signal transmission (S21). The terminal device is supported to report the positioning capability information, so as to improve the flexibility of the terminal device and improve the accuracy of positioning measurement.

## Description

### TECHNICAL FIELD

The present disclosure relates to the field of communication technologies, and in particular to a method and an apparatus for determining a multi-carrier-frequency carrier phase positioning capability.

### BACKGROUND

In related art, there is provided a carrier phase-based positioning method, and positioning measurement and reporting are performed according to a fractional part and an integer number of complete cycles of the carrier phase. However, there is an ambiguity problem for the integer number of complete cycles of the carrier phase, and there is still much room for improvement in accuracy of positioning measurement.

### SUMMARY

Embodiments of the present disclosure provide a method for determining a multi-carrier-frequency carrier phase positioning capability and an apparatus, which support a terminal device to report positioning capability information, so as to improve flexibility of the terminal device and improve accuracy of positioning measurement.

In a first aspect, the embodiments of the present disclosure provide a method for determining multi-carrier-frequency carrier phase positioning capability. The method is applied to a terminal device, and includes: sending positioning capability information to a network device. The positioning capability information is configured to indicate capability information about transmitting multi-carrier-frequency positioning signals.

In the technical solution, the terminal device can send the positioning capability information to the network device, and the positioning capability information is configured to indicate the capability information about transmitting multi-carrier-frequency positioning signals. The terminal device and the network device can determine that the terminal device has the capability to transmit the multi-carrier-frequency positioning signals according to the positioning capability information sent by the terminal device to the network device, and the positioning signals are sent, received and measured on the multiple carrier frequencies supported by the terminal device. Therefore, the flexibility of the terminal device and the accuracy of positioning measurement can be improved.

In a second aspect, the embodiments of the present disclosure provide another method for determining multi-carrier-frequency carrier phase positioning capability. The method is applied to a network device, and includes: receiving positioning capability information sent by a terminal device. The positioning capability information is configured to indicate capability information about transmitting multi-carrier-frequency positioning signals.

In a third aspect, the embodiments of the present disclosure provide a communication apparatus. The communication apparatus has some or all functions of the terminal device for implementing the method described in the first aspect. For example, the functions of the communication apparatus may be functions in some or all of the embodiments in the present disclosure, and may also be functions of any one of the embodiments in the present disclosure. The functions may be achieved by hardware and may also be achieved by the hardware executing corresponding software. The hardware or the software includes one or more units or modules corresponding to the above functions.

In one implementation, a structure of the communication apparatus may include a transceiving module and a processing module. The processing module is configured to support the communication apparatus to execute the corresponding functions in the above method. The transceiving module is used for supporting a communication between the communication apparatus and other devices. The communication apparatus may further include a storage module. The storage module is used for coupling to the transceiving module and the processing module, and saves a necessary computer program and data of the communication apparatus.

As an example, the processing module may be a processor; the transceiving module may be a transceiver or communication interface; and the storage module may be a memory.

In one implementation, the communication apparatus includes: a transceiving module, configured to send positioning capability information to a network device. The positioning capability information is configured to indicate capability information about transmitting multi-carrier-frequency positioning signals.

In a fourth aspect, the embodiments of the present disclosure provide another communication apparatus. The communication apparatus has some or all functions of the network device for implementing the method described in the second aspect. For example, the functions of the communication apparatus may be functions in some or all of the embodiments in the present disclosure, and may also be functions of any one of the embodiments in the present disclosure. The functions may be achieved by hardware and may also be achieved by the hardware executing corresponding software. The hardware or the software includes one or more units or modules corresponding to the above functions.

In one implementation, a structure of the communication apparatus may include a transceiving module and a processing module. The processing module is configured to support the communication apparatus to execute the corresponding functions in the above method. The transceiving module is used for supporting a communication between the communication apparatus and other devices. The communication apparatus may further include a storage module. The storage module is used for coupling to the transceiving module and the processing module, and saves a necessary computer program and data of the communication apparatus.

In one implementation, the communication apparatus includes: a transceiving module, configured to receive positioning capability information sent by a terminal device. The positioning capability information is configured to indicate capability information about transmitting multi-carrier-frequency positioning signals.

In a fifth aspect, the embodiments of the present disclosure provide a communication apparatus, including a processor. The processor implements the method in the first aspect when calling a computer program in a memory.

In a sixth aspect, the embodiments of the present disclosure provide a communication apparatus, including a processor. The processor implements the method in the second aspect when calling a computer program in a memory.

In a seventh aspect, the embodiments of the present disclosure provide a communication apparatus, including a processor and a memory. The memory stores a computer program therein; and the processor executes the computer program stored in the memory, to enable the communication apparatus to implement the method in the first aspect.

In an eighth aspect, the embodiments of the present disclosure provide a communication apparatus, including a processor and a memory. The memory stores a computer program therein; and the processor executes the computer program stored in the memory, to enable the communication apparatus to implement the method in the second aspect.

In a ninth aspect, the embodiments of the present disclosure provide a communication apparatus, including a processor and an interface circuit. The interface circuit is configured to receive a code instruction and transmitting the code instruction to the processor; and the processor is configured to run the code instruction, to enable the apparatus to implement the method in the first aspect.

In a tenth aspect, the embodiments of the present disclosure provide a communication apparatus, including a processor and an interface circuit. The interface circuit is configured to receive a code instruction and transmitting the code instruction to the processor; and the processor is configured to run the code instruction, to enable the apparatus to implement the method in the second aspect.

In an eleventh aspect, the embodiments of the present disclosure provide a communication system, including the communication apparatus in the third aspect and the communication apparatus in the fourth aspect, or including the communication apparatus in the fifth aspect and the communication apparatus in the sixth aspect, or including the communication apparatus in the seventh aspect and the communication apparatus in the eighth aspect, or including the communication apparatus in the ninth aspect and the communication apparatus in the tenth aspect.

In a twelfth aspect, the embodiments of the present disclosure provide a computer readable storage medium, for storing instructions used by the terminal device. The instructions, when being executed, enable the terminal device to implement the method in the first aspect.

In a thirteenth aspect, the embodiments of the present disclosure provide a readable storage medium, for storing instructions used by the network device. The instructions, when being executed, enable the network device to implement the method in the second aspect.

In a fourteenth aspect, the present disclosure further provides a computer program product of a computer program. The computer program product, when running on a computer, enables the computer to implement the method in the first aspect.

In a fifteenth aspect, the present disclosure further provides a computer program product of a computer program. The computer program product, when running on a computer, enables the computer to implement the method in the second aspect.

In a sixteenth aspect, the present disclosure provides a chip system, including at least one processor and an interface, and used for supporting a terminal device to achieve the functions of the first aspect, for example, for determining or processing at least one of data and information of the above method. In a possible design, the chip system further includes a memory used for storing necessary computer programs and data for the terminal device. The chip system may be composed of chips, and may also include a chip and other discrete devices.

In a seventeenth aspect, the present disclosure provides a chip system, including at least one processor and an interface, and used for supporting a network device to achieve the functions of the second aspect, for example, for determining or processing at least one of data and information of the above method. In a possible design, the chip system further includes a memory used for storing necessary computer programs and data for the network device. The chip system may be composed of chips, and may also include a chip and other discrete devices.

In an eighteenth aspect, the present disclosure provides a computer program, which, when running on a computer, enables the computer to implement the method in the first aspect.

In a nineteenth aspect, the present disclosure provides a computer program, which, when running on a computer, enables the computer to implement the method in the second aspect.

### BRIEF DESCRIPTION OF THE DRAWINGS

In order to more clearly describe the technical solutions of the embodiments of the present disclosure or in the background, the accompanying drawings required for the embodiments of the present disclosure or the background are described below.
FIG. 1 is an architecture diagram of a communication system provided by an embodiment of the present disclosure.
FIG. 2 is a flow chart of a method for determining a multi-carrier-frequency carrier phase positioning capability provided by an embodiment of the present disclosure.
FIG. 3 is a flow chart of another method for determining a multi-carrier-frequency carrier phase positioning capability provided by an embodiment of the present disclosure.
FIG. 4 is a structural diagram of a communication apparatus provided by an embodiment of the present disclosure.
FIG. 5 is a structural diagram of another communication apparatus provided by an embodiment of the present disclosure.
FIG. 6 is a schematic structural diagram of a chip provided by embodiments of the present disclosure.

### DETAILED DESCRIPTION

In order to better understand a method and an apparatus for determining a multi-carrier-frequency carrier phase positioning capability disclosed in the embodiments of the present disclosure. A communication system applicable to the embodiments of the present disclosure is first described below.

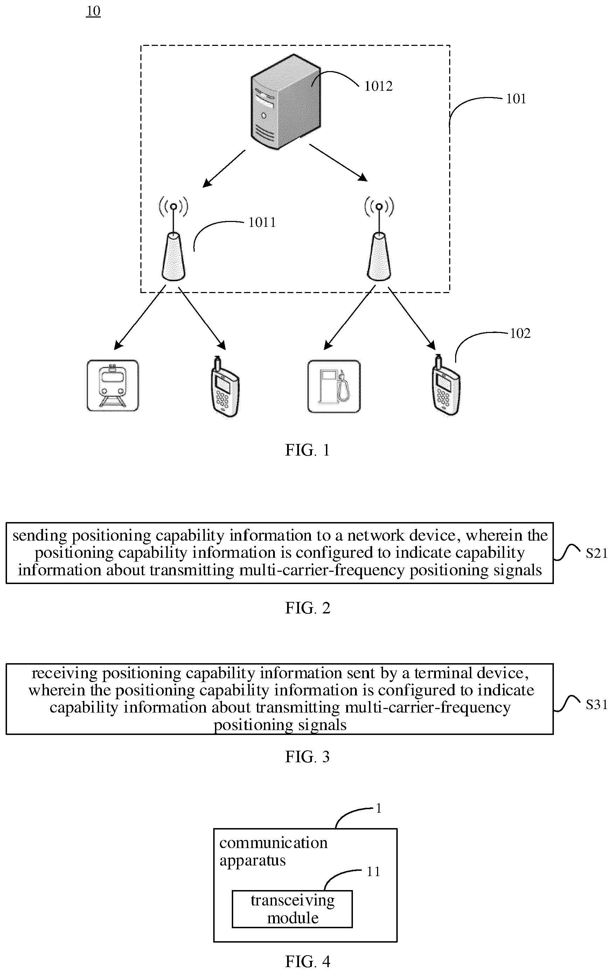

Referring to FIG. 1, FIG. 1 is an architecture diagram of a communication system provided by an embodiment of the present disclosure. The communication system may include, but is not limited to, one network device and one terminal device. The network device includes an access network device and/or a core network device. The number of devices and shapes of the devices shown in FIG. 1 are only used for examples and do not constitute a limitation to embodiments of the present disclosure. In practical applications, the communication system may include two or more network devices, two or more terminal devices, two or more access network devices, and two or more core network devices. As an example, the communication system shown in FIG. 1 includes one network device 101 and one terminal device 102, in which the network device 101 includes an access network device 1011 and a core network device 1012.

It is to be noted that the technical solutions of the embodiments of the present disclosure may be applied to various communication systems, for example, a long term evolution (LTE) system, a 5th generation (5G) mobile communication system, a 5G new radio (NR) system, or other future new mobile communication systems. It is to be noted that a sidelink in the embodiments of the present disclosure may further be called a side link or a direct link.

The radio access network (RAN) device 1011 is mainly responsible for radio resource management, quality of service (QoS) management, data compression, encryption and other functions on an air interface side. The access network device 1011 may include various forms of base stations, such as a macro base station, a micro base station (also called a small station), a relay station, an access point, a transmission reception point (TRP), etc. In systems using different wireless access technologies, names of devices with a base station function may vary. For example, in a 5th generation (5G) system, it is called gNB; in a LTE system, it is called evolved node B (eNB or eNodeB); and in a 3rd generation (3G) system, it is called node B, etc.

Optionally, the access network device 1011 includes a central unit (CU) and a plurality of distributed units (DU). The CU is a logic node, and includes a part of functions of the gNB; and the DU is a logic node, and includes functions of the gNB other than those of the CU. One CU may correspond to a plurality of DUs. In an optional implementation, the CU includes radio resource control (RRC), packet data convergence protocol (PDCP), and service data adaptation protocol (SDAP) stack functions. The DU includes radio link control (RLC), media access control (MAC), and physical layer (PHY) protocol stack functions. There is a communication interface between the CU and the DU.

The core network device 1012 is configured to provide user connection, user management and service bearer. For example, establishment of user connection includes functions such as mobile management (MM) and paging. The user management includes user description, Qos, security (corresponding security measures provided by an authentication center includes security management of mobile services and security processing on external network access). The bearer connection includes an external public switched telephone network (PSTN), an external circuit data network and a packet data network, Internet, etc. For example, the core network device 1012 may be an access and mobility management function (AMF), mainly responsible for a signaling processing part, that is, a control plane function, including access control, mobility management, attachment and de-attachment, gateway selection and the like. The core network device 1012 of the embodiments of the present disclosure is not limited to the AMF.

The terminal device 102 in the embodiments of the present disclosure is an entity on a user side for receiving or transmitting a signal, such as a mobile phone. The terminal device may also be called a terminal, a user equipment (UE), a mobile station (MS), a mobile terminal (MT), etc. The terminal device may be a vehicle with a communication function, an intelligent vehicle, a mobile phone, a wearable device, a Pad, a computer with a wireless transceiver function, a virtual reality (VR) terminal device, an augmented reality (AR) terminal device, a wireless terminal device in industrial control, a wireless terminal device in self-driving, a wireless terminal device in remote medical surgery, a wireless terminal device in a smart grid, a wireless terminal device in transportation safety, a wireless terminal device in a smart city, a wireless terminal device in a smart home, etc. The embodiments of the present disclosure do not limit a specific technology and a specific shape used by the terminal devices.

It is to be understood that the communication system described in the embodiments of the present disclosure is to clarify the technical solutions of the embodiments of the present disclosure more clearly, and does not constitute a limitation to the technical solutions provided by the embodiments of the present disclosure. It could be known to those of ordinary skill in the art that with the evolution of a system architecture and the emergence of a new business scenario, the technical solutions provided by the embodiments of the present disclosure is also applicable to similar technical problems.

In related art, there is provided a carrier phase-based positioning method, and positioning measurement and reporting are performed according to a fractional part and an integer number of complete cycles of the carrier phase. The fractional part of the carrier phase refers to a fractional part smaller than one complete cycle, and is a part of a phase difference between a reference signal generated by a receiver and a carrier signal from a sender which is smaller than one complete cycle, or a part of a phase of the carrier signal received by the receiver from the sender which is smaller than one complete cycle. The integer number of complete cycles corresponds to an exact integer number of the complete cycles other than the fractional part smaller than complete cycle. Due to the integer ambiguity problem of the carrier phase, there is still much room for improvement in accuracy of positioning measurement.

In the invention of the present disclosure, in order to solve the integer ambiguity problem, a multi-carrier-frequency is introduced into a new radio access technology (NR). The multiple carrier frequencies are used to send positioning signals, and the multiple carrier frequencies have different wavelengths but experience the same transmission distance, which can better solve the integer ambiguity problem. However, the terminal device needs to report whether a terminal device supports transmission of multi-carrier-frequency positioning signals and which combination of multi-carrier-frequency positioning signals is supported by the terminal device for transmission. At present, there is still a lack of a relevant method for reporting a capacity of the terminal device.

Based on this, embodiments of the present disclosure provide a method and an apparatus for determining a multi-carrier-frequency carrier phase positioning capability, so as to at least solve the problems in the related art.

Referring to FIG. 2, FIG. 2 is a flow chart of a method for determining a multi-carrier-frequency carrier phase positioning capability provided by an embodiment of the present disclosure.

As shown in FIG. 2, the method is applicable to a terminal device, and may include, but is not limited to, the following steps.

In S21, positioning capability information is sent to a network device, in which the positioning capability information is configured to indicate capability information about transmitting multi-carrier-frequency positioning signals.

In the embodiments of the present disclosure, the terminal device may send the positioning capability information to the network device, and the positioning capability information is configured to indicate the capability information about transmitting the multi-carrier-frequency positioning signals, so as to report to the network device that the terminal device supports the transmission of the multi-carrier-frequency positioning signals and supports which carrier frequency combination for the transmission of the multi-carrier-frequency positioning signals.

Based on this, the terminal device and the network device can determine that the terminal device has the capability to transmit the multi-carrier-frequency positioning signals according to the positioning capability information sent by the terminal device to the network device, and positioning signals are sent, received and measured on multiple carrier frequencies supported by the terminal device. Therefore, the flexibility of the terminal device and the accuracy of positioning measurement can be improved.

The positioning signals are sent, received and measured on at least two carrier frequencies; and the at least two carrier frequencies are used in aggregation to transmit the same positioning signal, or are used to independently transmit different positioning signals. If the at least two carrier frequencies are aggregated to transmit the same positioning signal, it is necessary to measure the positioning signal on the at least two carrier frequencies to obtain one measurement result. If different positioning signals are transmitted independently, it is only necessary to measure the positioning signal on one carrier frequency to obtain one measurement result.

In some embodiments, the positioning signals include a positioning reference signal (PRS) and a sounding reference signal (SRS).

In this embodiment of the present disclosure, the terminal device sends the positioning capability information to the network device, the positioning capability information is configured to indicate the information of the capability of the terminal device to transmit the multi-carrier-frequency positioning signals, in which the positioning signals may include the PRS and the SRS.

Of course, in the embodiments of the present disclosure, the positioning signals may also be signals other than the PRS and the SRS; and with the continuous progress of technology, the positioning signals may also be other new signals for positioning, which is not specifically limited in the embodiments of the present disclosure.

In some embodiments, the positioning capability information includes at least one of:
capability information about receiving the multi-carrier-frequency positioning signals by the terminal device; or
capability information about sending the multi-carrier-frequency positioning signal by the terminal device.

In this embodiment of the present disclosure, the terminal device sends the positioning capability information to the network device, the positioning capability information is configured to indicate the information of the capability of the terminal device to transmit the multi-carrier-frequency positioning signals. The positioning capability information includes capability information about receiving the multi-carrier-frequency positioning signals by the terminal device, or includes capability information about sending the multi-carrier-frequency positioning signals by the terminal device, or includes capability information about receiving and sending the multi-carrier-frequency positioning signals by the terminal device.

In some embodiments, the capability information about receiving the multi-carrier-frequency positioning signals by the terminal device and/or the capability information about sending the multi-carrier-frequency positioning signals by the terminal device includes at least one of:
a number of receivers and/or senders of the terminal device;
a carrier frequency and/or a bandwidth of a receiving filter and/or a sending filter of the terminal device;
a number of carrier frequencies supported by the terminal device for receiving and/or sending the positioning signals in a simultaneous manner;
a number of carrier frequencies supported by the terminal device for receiving and/or sending the positioning signals in a non-simultaneous manner;
a first carrier frequency set supported by the terminal device for receiving and/or sending the positioning signals in a simultaneous manner;
a second carrier frequency set supported by the terminal device for receiving and/or sending the positioning signals in a non-simultaneous manner;
a number of carrier frequencies supported by the terminal device to be configured for receiving and/or sending the positioning signals; or
a third carrier frequency set supported by the terminal device to be configured for receiving and/or sending the positioning signals.

In a possible implementation, the terminal device sends the positioning capability information to the network device, the positioning capability information is configured to indicate the capability information about transmitting multi-carrier-frequency positioning signals. The positioning capability information includes the capability information about receiving the multi-carrier-frequency positioning signals by the terminal device. The capability information about receiving the multi-carrier-frequency positioning signals by the terminal device includes the number of receivers of the terminal device.

In a possible implementation, the terminal device sends the positioning capability information to the network device, the positioning capability information is configured to indicate the capability information about transmitting multi-carrier-frequency positioning signals. The positioning capability information includes the capability information about receiving the multi-carrier-frequency positioning signals by the terminal device. The capability information about receiving the multi-carrier-frequency positioning signals by the terminal device includes the carrier frequency and/or the bandwidth of the receiving filter of the terminal device.

In a possible implementation, the terminal device sends the positioning capability information to the network device, the positioning capability information is configured to indicate the capability information about transmitting multi-carrier-frequency positioning signals. The positioning capability information includes the capability information about receiving the multi-carrier-frequency positioning signals by the terminal device. The capability information about receiving the multi-carrier-frequency positioning signals by the terminal device includes the number of carrier frequencies supported by the terminal device for receiving the positioning signals in a simultaneous manner.

In some embodiments, the simultaneous manner is that there is at least one overlapping symbol and/or slot between positioning signals on a plurality of carrier frequencies for the multi-carrier-frequency positioning signals in a time domain, or that a time domain interval between positioning signals on a plurality of carrier frequencies for the multi-carrier-frequency positioning signals is smaller than a first specific number of symbols and/or slots.

It is to be understood that, for the number of carrier frequencies supported by the terminal device for receiving the positioning signals in the simultaneous manner, the simultaneous receiving may be that there is at least one overlapping symbol and/or slot between positioning signals on a plurality of supported carrier frequencies, that are supported for receiving, in the time domain, or that the time domain interval between the positioning signals on the plurality of carrier frequencies, that are supported for receiving, is smaller than the first specific number of symbols and/or slots.

It is to be understood that, for the first carrier frequency set supported by the terminal device for receiving the positioning signals in the simultaneous manner, the simultaneous receiving may be that there is at least one overlapping symbol and/or slot between the positioning signals on the plurality of carrier frequencies of the first carrier frequency set, that is supported for receiving, in the time domain, or that the time domain interval between the positioning signals on the plurality of carrier frequencies in the first carrier frequency set, that is supported for receiving, is smaller than the first specific number of symbols and/or slots.

In some embodiments, the positioning capability information includes the first specific number.

The first specific number may be set as needed, which is not specifically limited in the embodiments of the present disclosure.

In a possible implementation, the terminal device sends the positioning capability information to the network device, the positioning capability information is configured to indicate the capability information about transmitting multi-carrier-frequency positioning signals. The positioning capability information includes capability information about receiving the multi-carrier-frequency positioning signals by the terminal device. The capability information about receiving the multi-carrier-frequency positioning signals by the terminal device includes the number of carrier frequencies supported by the terminal device for receiving the positioning signals in a non-simultaneous manner.

In some embodiments, the non-simultaneous manner is that a time domain interval between positioning signals on a plurality of carrier frequencies for the multi-carrier-frequency positioning signals is greater than a second specific number of symbols and/or slots.

It is to be understood that, for the number of carrier frequencies supported by the terminal device for receiving the positioning signals in the non-simultaneous manner, the non-simultaneous receiving may be that the time domain interval between the positioning signals on the plurality of carrier frequencies, that are supported for receiving, is greater than the second specific number of symbols and/or slots.

It is to be understood that, for the second carrier frequency set supported by the terminal device for receiving the positioning signals in the non-simultaneous manner, the non-simultaneous receiving may be that the time domain interval between the positioning signals on the plurality of carrier frequencies in the second carrier frequency set, that is supported for receiving, is greater than the second specific number of symbols and/or slots.

In some embodiments, the positioning capability information includes the second specific number.

The second specific number may be set as needed, which is not specifically limited in the embodiments of the present disclosure.

In an embodiment of the present disclosure, the first specific number may be equal to the second specific number.

In a possible implementation, the terminal device sends the positioning capability information to the network device, the positioning capability information is configured to indicate the capability information about transmitting multi-carrier-frequency positioning signals. The positioning capability information includes capability information about receiving the multi-carrier-frequency positioning signals by the terminal device. The capability information about receiving the multi-carrier-frequency positioning signals by the terminal device includes the first carrier frequency set supported by the terminal device for receiving the positioning signals in a simultaneous manner.

In some embodiments, the simultaneous manner is that there is at least one overlapping symbol and/or slot between positioning signals on a plurality of carrier frequencies for the multi-carrier-frequency positioning signals in a time domain, or that a time domain interval between positioning signals on a plurality of carrier frequencies for the multi-carrier-frequency positioning signals is smaller than a first specific number of symbols and/or slots.

It is to be understood that, for the number of carrier frequencies supported by the terminal device for receiving the positioning signals in the simultaneous manner, the simultaneous receiving may be that there is at least one overlapping symbol and/or slot between the positioning signals on the plurality of carrier frequencies, that are supported for receiving, in the time domain, or that the time domain interval between the positioning signals on the plurality of carrier frequencies, that are supported for receiving, is smaller than the first specific number of symbols and/or slots.

It is to be understood that, for the first carrier frequency set supported by the terminal device for receiving the positioning signals in the simultaneous manner, the simultaneous receiving may be that there is at least one overlapping symbol and/or slot between the positioning signals on the plurality of carrier frequencies of the first carrier frequency set, that is supported for receiving, in the time domain, or that the time domain interval between the positioning signals on the plurality of carrier frequencies in the first carrier frequency set, that is supported for receiving, is smaller than the first specific number of symbols and/or slots.

In some embodiments, the positioning capability information includes the first specific number.

The first specific number may be set as needed, which is not specifically limited in the embodiments of the present disclosure.

In some embodiments, the first carrier frequency set includes:
a maximum set of at least one carrier frequency combination supportable by the terminal device; or
at least one carrier frequency combination supportable by the terminal device.

In this embodiment of the present disclosure, the terminal device sends the positioning capability information to the network device, the positioning capability information is configured to indicate the information of the capability of the terminal device to transmit the multi-carrier-frequency positioning signals; and the positioning capability information includes the capability information about receiving the multi-carrier-frequency positioning signals by the terminal device.

The capability information about receiving the multi-carrier-frequency positioning signals by the terminal device includes the first carrier frequency set supported by the terminal device for receiving the positioning signals in a simultaneous manner; and the first carrier frequency set includes a maximum set of at least one carrier frequency combination supportable by the terminal device, or at least one carrier frequency combination supportable by the terminal device.

Exemplarily, the first carrier frequency set includes the maximum set of at least one carrier frequency combination supportable by the terminal device. In a case that the first carrier frequency set includes the maximum set {F1, F2, F3} supportable by the terminal device for receiving the positioning signals in a simultaneous manner, the terminal device may support any subset of the maximum set for receiving the positioning signals in a simultaneous manner, for example, a combination 2 {F1, F2}, a combination 3 {F1, F3}, and a combination 4 {F2, F3}, in which F1, F2, and F3 represent three carrier frequencies respectively, being 800 MHz, 1.5 GHz, and 2.8 GHz respectively.

Exemplarily, the first carrier frequency set includes the at least one carrier frequency combination supportable by the terminal device. At this time, the terminal device only supports the reported carrier frequency combination for receiving the positioning signals in a simultaneous manner; and the unreported carrier frequency combination indicates that the terminal device does not support the unreported carrier frequency combination for receiving the positioning signals in a simultaneous manner. For example, the first carrier frequency set includes: the combination 1 {F1, F2} and the combination 2 {F 1, F3}. It indicates that the carrier frequency combinations supported by the terminal device for receiving the positioning signals in a simultaneous manner are the combination 1 {F 1, F2} and the combination 2 {F 1, F3}, and the carrier frequency combinations not supported by the terminal device for receiving the positioning signals in a simultaneous manner are the combination 3 {F1, F2, F3}, the combination 4 {F2, F3}, etc.

In a possible implementation, the terminal device sends the positioning capability information to the network device, the positioning capability information is configured to indicate the capability information about transmitting multi-carrier-frequency positioning signals. The positioning capability information includes capability information about receiving the multi-carrier-frequency positioning signals by the terminal device. The capability information about receiving the multi-carrier-frequency positioning signals by the terminal device includes the second carrier frequency set supported by the terminal device for receiving the positioning signals in a non-simultaneous manner.

In some embodiments, the non-simultaneous manner is that a time domain interval between positioning signals on a plurality of carrier frequencies for the multi-carrier-frequency positioning signals is greater than a second specific number of symbols and/or slots.

It is to be understood that, for the number of carrier frequencies supported by the terminal device for receiving the positioning signals in the non-simultaneous manner, the non-simultaneous receiving may be that the time domain interval between the positioning signals on the plurality of carrier frequencies, that are supported for receiving, is greater than the second specific number of symbols and/or slots.

It is to be understood that, for the second carrier frequency set supported by the terminal device for receiving the positioning signals in the non-simultaneous manner, the non-simultaneous receiving may be that the time domain interval between the positioning signals on the plurality of carrier frequencies in the second carrier frequency set, that is supported for receiving, is greater than the second specific number of symbols and/or slots.

In some embodiments, the positioning capability information includes the second specific number.

The second specific number may be set as needed, which is not specifically limited in the embodiments of the present disclosure.

In an embodiment of the present disclosure, the first specific number may be equal to the second specific number.

In some embodiments, the second carrier frequency set includes:
a maximum set of at least one carrier frequency combination not supportable by the terminal device; or
at least one carrier frequency combination not supportable by the terminal device.

In this embodiment of the present disclosure, the terminal device sends the positioning capability information to the network device, the positioning capability information is configured to indicate the information of the capability of the terminal device to transmit the multi-carrier-frequency positioning signals; and the positioning capability information includes the capability information about receiving the multi-carrier-frequency positioning signals by the terminal device.

The capability information about receiving the multi-carrier-frequency positioning signals by the terminal device includes the second carrier frequency set supported by the terminal device for receiving the positioning signals in a non-simultaneous manner; and the second carrier frequency set includes a maximum set of at least one carrier frequency combination not supportable by the terminal device, or at least one carrier frequency combination not supportable by the terminal device.

Exemplarily, the second carrier frequency set includes the maximum set of at least one carrier frequency combination not supportable by the terminal device for receiving the positioning signals in a simultaneous manner. In a case that the second carrier frequency set includes the maximum set {F1, F2, F3} not supportable by the terminal device for receiving the positioning signals in a simultaneous manner, the terminal device does not support any subset of the maximum set for receiving the positioning signals in a simultaneous manner, for example, a combination 2 {F1, F2}, a combination 3 {F1, F3}, and a combination 4 {F2, F3}, in which F1, F2, and F3 represent three carrier frequencies respectively, being 800 MHz, 1.5 GHz, and 2.8 GHz respectively.

Exemplarily, the second carrier frequency set includes the at least one carrier frequency combination not supportable by the terminal device. At this time, the terminal device does not support the reported carrier frequency combination for receiving the positioning signals in a simultaneous manner; and the unreported carrier frequency combination indicates that the terminal device may support the unreported carrier frequency combinations for receiving the positioning signals in a simultaneous manner. For example, the second carrier frequency set includes: the combination 1 {F1, F2} and the combination 2 {F1, F3}. It indicates that the carrier frequency combinations not supportable by the terminal device for receiving the positioning signals in a simultaneous manner are the combination 1 {F 1, F2} and the combination 2 {F 1, F3}, and the carrier frequency combinations supportable by the terminal device for receiving the positioning signals in a simultaneous manner are the combination 3 {F 1, F2, F3}, the combination 4 {F2, F3}, etc.

In a possible implementation, the terminal device sends the positioning capability information to the network device, the positioning capability information is configured to indicate the capability information about transmitting multi-carrier-frequency positioning signals. The positioning capability information includes the capability information about receiving the multi-carrier-frequency positioning signals by the terminal device. The capability information about receiving the multi-carrier-frequency positioning signals by the terminal device includes the number of carrier frequencies supported by the terminal device to be configured for receiving the positioning signals,

In a possible implementation, the terminal device sends the positioning capability information to the network device, the positioning capability information is configured to indicate the capability information about transmitting multi-carrier-frequency positioning signals. The positioning capability information includes the capability information about receiving the multi-carrier-frequency positioning signals by the terminal device. The capability information about receiving the multi-carrier-frequency positioning signals by the terminal device includes the third carrier frequency set supported by the terminal device to be configured for receiving the positioning signals,

In some embodiments, the third carrier frequency set includes:
a maximum set of at least one carrier frequency combination supportable by the terminal device; or
at least one carrier frequency combination supportable by the terminal device.

In this embodiment of the present disclosure, the terminal device sends the positioning capability information to the network device, the positioning capability information is configured to indicate the information of the capability of the terminal device to transmit the multi-carrier-frequency positioning signals; and the positioning capability information includes the capability information about receiving the multi-carrier-frequency positioning signals by the terminal device.

The capability information about receiving the multi-carrier-frequency positioning signals by the terminal device includes the third carrier frequency set supported by the terminal device to be configured for receiving the positioning signals; and the third carrier frequency set includes a maximum set of at least one carrier frequency combination supportable by the terminal device, or at least one carrier frequency combination supportable by the terminal device.

Exemplarily, the third carrier frequency set includes the maximum set of at least one carrier frequency combination supportable by the terminal device. In a case that the third carrier frequency set includes the maximum set {F1, F2, F3} supportable by the terminal device, the terminal device may support any subset of the maximum set, for example, a combination 2 {F1, F2}, a combination 3 {F1, F3}, and a combination 4 {F2, F3}, in which F1, F2, and F3 represent three carrier frequencies respectively, being 800 MHz, 1.5 GHz, and 2.8 GHz respectively.

Exemplarily, the third carrier frequency set includes at least one carrier frequency combination supportable by the terminal device. At this time, the terminal device only supports the reported carrier frequency combination, and the unreported carrier frequency combination indicates that the terminal device does not support the unreported carrier frequency combination. For example, the third carrier frequency set includes: the combination 1 {F 1, F2} and the combination 2 {F 1, F3}. It indicates that the terminal device only supports the combination 1 {F1, F2} and the combination 2 {F 1, F3}, and does not support the combination 3 {F1, F2, F3}, the combination 4 {F2, F3}, etc.

In a possible implementation, the terminal device sends the positioning capability information to the network device, the positioning capability information is configured to indicate the capability information about transmitting multi-carrier-frequency positioning signals. The positioning capability information includes the capability information about sending the multi-carrier-frequency positioning signals by the terminal device. The capability information about sending the multi-carrier-frequency positioning signals by the terminal device includes the number of senders of the terminal device.

In a possible implementation, the terminal device sends the positioning capability information to the network device, the positioning capability information is configured to indicate the capability information about transmitting multi-carrier-frequency positioning signals. The positioning capability information includes the capability information about sending the multi-carrier-frequency positioning signals by the terminal device. The capability information about sending the multi-carrier-frequency positioning signals by the terminal device includes the carrier frequency and/or the bandwidth of the sending filter of the terminal device.

In a possible implementation, the terminal device sends the positioning capability information to the network device, the positioning capability information is configured to indicate the capability information about transmitting multi-carrier-frequency positioning signals. The positioning capability information includes the capability information about sending the multi-carrier-frequency positioning signals by the terminal device. The capability information about sending the multi-carrier-frequency positioning signals by the terminal device includes the number of carrier frequencies supported by the terminal device for sending the positioning signals in a simultaneous manner.

In some embodiments, the simultaneous manner is that there is at least one overlapping symbol and/or slot between positioning signals on a plurality of carrier frequencies for the multi-carrier-frequency positioning signals in a time domain, or that a time domain interval between positioning signals on a plurality of carrier frequencies for the multi-carrier-frequency positioning signals is smaller than a first specific number of symbols and/or slots.

It is to be understood that, for the number of carrier frequencies supported by the terminal device for sending the positioning signals in a simultaneous manner, the simultaneous sending may be that there is at least one overlapping symbol and/or slot between the positioning signals on the plurality of carrier frequencies, that are supported for sending, in the time domain, or that the time domain interval between the positioning signals on the plurality of carrier frequencies, that are supported for sending, is smaller than the first specific number of symbols and/or slots.

It is to be understood that, for the first carrier frequency set supported by the terminal device for sending the positioning signals in a simultaneous manner, the simultaneous sending may be that there is at least one overlapping symbol and/or slot between the positioning signals on the plurality of carrier frequencies in the first carrier frequency set, that is supported for sending, in the time domain, or that the time domain interval between the positioning signals on the plurality of carrier frequencies in the first carrier frequency set, that is supported for sending, is smaller than the first specific number of symbols and/or slots.

In some embodiments, the positioning capability information includes the first specific number.

The first specific number may be set as needed, which is not specifically limited in the embodiments of the present disclosure.

In a possible implementation, the terminal device sends the positioning capability information to the network device, the positioning capability information is configured to indicate the capability information about transmitting multi-carrier-frequency positioning signals. The positioning capability information includes the capability information about sending the multi-carrier-frequency positioning signals by the terminal device. The capability information about sending the multi-carrier-frequency positioning signals by the terminal device includes the number of carrier frequencies supported by the terminal device for sending the positioning signals in a non-simultaneous manner.

In some embodiments, the non-simultaneous manner is that a time domain interval between positioning signals on a plurality of carrier frequencies for the multi-carrier-frequency positioning signals is greater than a second specific number of symbols and/or slots.

It is to be understood that, for the number of carrier frequencies supported by the terminal device for sending the positioning signals in a non-simultaneous manner, the non-simultaneous sending may be that the time domain interval between the positioning signals on the plurality of carrier frequencies, that are supported for sending, is greater than the second specific number of symbols and/or slots.

It is to be understood that, for the second carrier frequency set supported by the terminal device for sending the positioning signals in a non-simultaneous manner, the non-simultaneous sending may be that the time domain interval between the positioning signals on the plurality of carrier frequencies in the second carrier frequency set, that is supported for sending, is greater than the second specific number of symbols and/or slots.

In some embodiments, the positioning capability information includes the second specific number.

The second specific number may be set as needed, which is not specifically limited in the embodiments of the present disclosure.

In an embodiment of the present disclosure, the first specific number may be equal to the second specific number.

In a possible implementation, the terminal device sends the positioning capability information to the network device, the positioning capability information is configured to indicate the capability information about transmitting multi-carrier-frequency positioning signals. The positioning capability information includes the capability information about sending the multi-carrier-frequency positioning signals by the terminal device. The capability information about sending the multi-carrier-frequency positioning signals by the terminal device includes the first carrier frequency set supported by the terminal device for sending the positioning signals in a simultaneous manner.

In some embodiments, the simultaneous manner is that there is at least one overlapping symbol and/or slot between positioning signals on a plurality of carrier frequencies for the multi-carrier-frequency positioning signals in a time domain, or that a time domain interval between positioning signals on a plurality of carrier frequencies for the multi-carrier-frequency positioning signals is smaller than a first specific number of symbols and/or slots.

It is to be understood that, for the number of carrier frequencies supported by the terminal device for sending the positioning signals in a simultaneous manner, the simultaneous sending may be that there is at least one overlapping symbol and/or slot between the positioning signals on the plurality of carrier frequencies, that are supported for sending, in the time domain, or that the time domain interval between the positioning signals on the plurality of carrier frequencies, that are supported for sending, is smaller than the first specific number of symbols and/or slots.

It is to be understood that, for the first carrier frequency set supported by the terminal device for sending the positioning signals in a simultaneous manner, the simultaneous sending may be that there is at least one overlapping symbol and/or slot between the positioning signals on the plurality of carrier frequencies in the first carrier frequency set, that is supported for sending, in the time domain, or that the time domain interval between the positioning signals on the plurality of carrier frequencies in the first carrier frequency set, that is supported for sending, is smaller than the first specific number of symbols and/or slots.

In some embodiments, the positioning capability information includes the first specific number.

The first specific number may be set as needed, which is not specifically limited in the embodiments of the present disclosure.

In some embodiments, the first carrier frequency set includes:
a maximum set of at least one carrier frequency combination supportable by the terminal device; or
at least one carrier frequency combination supportable by the terminal device.

In this embodiment of the present disclosure, the terminal device sends the positioning capability information to the network device, the positioning capability information is configured to indicate the information of the capability of the terminal device to transmit the multi-carrier-frequency positioning signals; and the positioning capability information includes capability information about sending the multi-carrier-frequency positioning signals by the terminal device.

The capability information about sending the multi-carrier-frequency positioning signals by the terminal device includes the first carrier frequency set supported by the terminal device for sending the positioning signals in a simultaneous manner; and the first carrier frequency set includes a maximum set of at least one carrier frequency combination supportable by the terminal device, or at least one carrier frequency combination supportable by the terminal device.

Exemplarily, the first carrier frequency set includes the maximum set of at least one carrier frequency combination supportable by the terminal device for sending the positioning signals in a simultaneous manner. In a case that the first carrier frequency set includes the maximum set {F1, F2, F3} supportable by the terminal device for sending the positioning signals in a simultaneous manner, the terminal device may support any subset of the maximum set for sending the positioning signals in a simultaneous manner, for example, a combination 2 {F1, F2}, a combination 3 {F1, F3}, and a combination 4 {F2, F3}, in which F1, F2, and F3 represent three carrier frequencies respectively, being 800 MHz, 1.5 GHz, and 2.8 GHz respectively.

Exemplarily, the first carrier frequency set includes the at least one carrier frequency combination supportable by the terminal device. At this time, the terminal device only supports the reported carrier frequency combination for sending the positioning signals in a simultaneous manner; and the unreported carrier frequency combination indicates that the terminal device does not support the unreported carrier frequency combination for sending the positioning signals in a simultaneous manner. For example, the first carrier frequency set includes: the combination 1 {F1, F2} and the combination 2 {F1, F3}. It indicates that the carrier frequency combinations supportable by the terminal device for sending the positioning signals in a simultaneous manner are the combination 1 {F1, F2} and the combination 2 {F1, F3}, and the carrier frequency combinations not supportable by the terminal device for sending the positioning signals in a simultaneous manner are the combination 3 {F1, F2, F3}, the combination 4 {F2, F3}, etc.

In a possible implementation, the terminal device sends the positioning capability information to the network device, the positioning capability information is configured to indicate the capability information about transmitting multi-carrier-frequency positioning signals. The positioning capability information includes the capability information about sending the multi-carrier-frequency positioning signals by the terminal device. The capability information about sending the multi-carrier-frequency positioning signals by the terminal device includes the second carrier frequency set supported by the terminal device for sending the positioning signals in a non-simultaneous manner.

In some embodiments, the non-simultaneous manner is that a time domain interval between positioning signals on a plurality of carrier frequencies for the multi-carrier-frequency positioning signals is greater than a second specific number of symbols and/or slots.

It is to be understood that, for the number of carrier frequencies supported by the terminal device for sending the positioning signals in a non-simultaneous manner, the non-simultaneous sending may be that the time domain interval between the positioning signals on the plurality of carrier frequencies, that are supported for sending, is greater than the second specific number of symbols and/or slots.

It is to be understood that, for the second carrier frequency set supported by the terminal device for sending the positioning signals in a non-simultaneous manner, the non-simultaneous sending may be that the time domain interval between the positioning signals on the plurality of carrier frequencies in the second carrier frequency set, that is supported for sending, is greater than the second specific number of symbols and/or slots.

In some embodiments, the positioning capability information includes the second specific number.

The second specific number may be set as needed, which is not specifically limited in the embodiments of the present disclosure.

In an embodiment of the present disclosure, the first specific number may be equal to the second specific number.

In some embodiments, the second carrier frequency set includes:
a maximum set of at least one carrier frequency combination not supportable by the terminal device; or
at least one carrier frequency combination not supportable by the terminal device.

In this embodiment of the present disclosure, the terminal device sends the positioning capability information to the network device, the positioning capability information is configured to indicate the information of the capability of the terminal device to transmit the multi-carrier-frequency positioning signals; and the positioning capability information includes capability information about sending the multi-carrier-frequency positioning signals by the terminal device.

The capability information about sending the multi-carrier-frequency positioning signals by the terminal device includes the second carrier frequency set supported by the terminal device for sending the positioning signals in a non-simultaneous manner; and the second carrier frequency set includes a maximum set of at least one carrier frequency combination not supportable by the terminal device, or at least one carrier frequency combination not supportable by the terminal device.

Exemplarily, the second carrier frequency set includes the maximum set of the at least one carrier frequency combination not supportable by the terminal device. In a case that the second carrier frequency set includes the maximum set {F1, F2, F3} not supportable by the terminal device for sending the positioning signals in a simultaneous manner, the terminal device does not support any subset of the maximum set for sending the positioning signals in a simultaneous manner, for example, a combination 2 {F1, F2}, a combination 3 {F1, F3}, and a combination 4 {F2, F3}, in which F1, F2, and F3 represent three carrier frequencies respectively, being 800 MHz, 1.5 GHz, and 2.8 GHz respectively.

Exemplarily, the second carrier frequency set includes the at least one carrier frequency combination not supportable by the terminal device. At this time, the terminal device does not support the reported carrier frequency combination for sending the positioning signals in a simultaneous manner; and the unreported carrier frequency combination indicates that the terminal device may support the unreported carrier frequency combinations for sending the positioning signals in a simultaneous manner. For example, the second carrier frequency set includes: the combination 1 {F1, F2} and the combination 2 {F1, F3}. It indicates that the carrier frequency combinations not supportable by the terminal device for sending the positioning signals in a simultaneous manner are the combination 1 {F1, F2} and the combination 2 {F1, F3}, and the carrier frequency combinations supportable by the terminal device for sending the positioning signals in a simultaneous manner are the combination 3 {F1, F2, F3}, the combination 4 {F2, F3}, etc.

In a possible implementation, the terminal device sends the positioning capability information to the network device, the positioning capability information is configured to indicate the capability information about transmitting multi-carrier-frequency positioning signals. The positioning capability information includes the capability information about sending the multi-carrier-frequency positioning signals by the terminal device. The capability information about sending the multi-carrier-frequency positioning signals by the terminal device includes the number of carrier frequencies supported by the terminal device to be configured for sending the positioning signals,

In a possible implementation, the terminal device sends the positioning capability information to the network device, the positioning capability information is configured to indicate the capability information about transmitting multi-carrier-frequency positioning signals. The positioning capability information includes the capability information about sending the multi-carrier-frequency positioning signals by the terminal device. The capability information about sending the multi-carrier-frequency positioning signals by the terminal device includes the third carrier frequency set supported by the terminal device to be configured for sending the positioning signals,

In some embodiments, the third carrier frequency set includes:
a maximum set of at least one carrier frequency combination supportable by the terminal device; or
at least one carrier frequency combination supportable by the terminal device.

In this embodiment of the present disclosure, the terminal device sends the positioning capability information to the network device, the positioning capability information is configured to indicate the information of the capability of the terminal device to transmit the multi-carrier-frequency positioning signals; and the positioning capability information includes capability information about sending the multi-carrier-frequency positioning signals by the terminal device.

The capability information about sending the multi-carrier-frequency positioning signals by the terminal device includes the third carrier frequency set supported by the terminal device for sending the positioning signals; and the third carrier frequency set includes a maximum set of at least one carrier frequency combination supportable by the terminal device, or at least one carrier frequency combination supportable by the terminal device.

Exemplarily, the third carrier frequency set includes the maximum set of at least one carrier frequency combination supportable by the terminal device for sending the positioning signals. In a case that the third carrier frequency set includes the maximum set {F1, F2, F3} supportable by the terminal device for sending the positioning signals, the terminal device may support any subset of the maximum set for sending the positioning signals, for example, a combination 2 {F1, F2}, a combination 3 {F1, F3}, and a combination 4 {F2, F3}, in which F1, F2, and F3 represent three carrier frequencies respectively, being 800 MHz, 1.5 GHz, and 2.8 GHz respectively.

Exemplarily, the third carrier frequency set includes the at least one carrier frequency combination supportable by the terminal device. At this time, the terminal device only supports the reported carrier frequency combination for sending the positioning signals; and the unreported carrier frequency combination indicates that the terminal device does not support the unreported carrier frequency combination for sending the positioning signals. For example, the third carrier frequency set includes: the combination 1 {F1, F2} and the combination 2 {F1, F3 }. It indicates that the carrier frequency combinations supportable by the terminal device for sending the positioning signals are the combination 1 {F1, F2} and the combination 2 {F1, F3}, and the carrier frequency combinations not supportable by the terminal device for sending the positioning signals are the combination 3 {F1, F2, F3}, the combination 4 {F2, F3}, etc.

In a possible implementation, the positioning capability information includes capability information about receiving the multi-carrier-frequency positioning signals by the terminal device.

The capability information about receiving the multi-carrier-frequency positioning signals by the terminal device includes at least one of:
a number of receivers of the terminal device;
a carrier frequency and/or a bandwidth of a receiving filter of the terminal device;
a number of carrier frequencies supported by the terminal device for receiving the positioning signals in a simultaneous manner;
a number of carrier frequencies supported by the terminal device for receiving the positioning signals in a non-simultaneous manner;
a first carrier frequency set supported by the terminal device for receiving the positioning signals in a simultaneous manner;
a second carrier frequency set supported by the terminal device for receiving the positioning signals in a non-simultaneous manner;
a number of carrier frequencies supported by the terminal device to be configured for receiving the positioning signals; or
a third carrier frequency set supported by the terminal device to be configured for receiving the positioning signals.

In a possible implementation, the positioning capability information includes capability information about sending the multi-carrier-frequency positioning signals by the terminal device.

The capability information about sending the multi-carrier-frequency positioning signals by the terminal device includes at least one of:
a number of senders of the terminal device;
a carrier frequency and/or a bandwidth of a sending filter of the terminal device;
a number of carrier frequencies supported by the terminal device for simultaneous sending positioning signals;
a number of carrier frequencies supported by the terminal device for sending the positioning signals in a non-simultaneous manner;
a first carrier frequency set supported by the terminal device for sending the positioning signals in a simultaneous manner;
a second carrier frequency set supported by the terminal device for sending the positioning signals in a non-simultaneous manner;
a number of carrier frequencies supported by the terminal device to be configured for sending the positioning signals; or
a third carrier frequency set supported by the terminal device to be configured for sending the positioning signals.

In this embodiment of the present disclosure, the terminal device sends the positioning capability information to the network device, the positioning capability information is configured to indicate the information of the capability of the terminal device to transmit the multi-carrier-frequency positioning signals; and the positioning capability information includes the capability information about receiving the multi-carrier-frequency positioning signals by the terminal device.

One receiver may correspond to at least one receiving filter.

The plurality of carrier frequencies supported by the terminal device to be configured for receiving the positioning signals may be understood as the plurality of carrier frequencies that can be configured for the terminal device for receiving the positioning signals. After the plurality of carrier frequencies are configured, at least one of receiving the positioning signals on different carrier frequencies in a simultaneous manner or non-simultaneous manner is supported.

The capability information about receiving the multi-carrier-frequency positioning signals by the terminal device includes the number of receivers of the terminal device, or includes the carrier frequency and/or the bandwidth of the receiving filter of the terminal device, or includes the number of carrier frequencies supported by the terminal device for receiving the positioning signals in a simultaneous manner, or includes the number of carrier frequencies supported by the terminal device for receiving the positioning signals in the non-simultaneous manner, or includes the first carrier frequency set supported by the terminal device for receiving the positioning signals in a simultaneous manner, or includes the second carrier frequency set supported by the terminal device for receiving the positioning signals in a non-simultaneous manner, or includes the number of carrier frequencies supported by the terminal device to be configured for receiving the positioning signals, or includes the third carrier frequency set supported by the terminal device to be configured for receiving the positioning signals, or includes the number of receivers of the terminal device and the number of carrier frequencies supported by the terminal device for receiving the positioning signals in a simultaneous manner, etc.

The capability information about receiving the multi-carrier-frequency positioning signals by the terminal device includes one or more of: the number of receivers of the terminal device, the carrier frequency and/or the bandwidth of the receiving filter of the terminal device, the number of carrier frequencies supported by the terminal device for receiving the positioning signals in a simultaneous manner, the number of carrier frequencies supported by the terminal device for receiving the positioning signals in the non-simultaneous manner, the first carrier frequency set supported by the terminal device for receiving the positioning signals in a simultaneous manner, the second carrier frequency set supported by the terminal device for receiving the positioning signals in a non-simultaneous manner, the number of carrier frequencies supported by the terminal device to be configured for receiving the positioning signals, or the third carrier frequency set supported by the terminal device to be configured for receiving the positioning signals.

In some embodiments, the first carrier frequency set includes:
a maximum set of at least one carrier frequency combination supportable by the terminal device; or
at least one carrier frequency combination supportable by the terminal device.

In this embodiment of the present disclosure, the terminal device sends the positioning capability information to the network device, the positioning capability information is configured to indicate the information of the capability of the terminal device to transmit the multi-carrier-frequency positioning signals; and the positioning capability information includes the capability information about receiving the multi-carrier-frequency positioning signals by the terminal device.

The capability information about receiving the multi-carrier-frequency positioning signals by the terminal device includes the first carrier frequency set supported by the terminal device for receiving the positioning signals in a simultaneous manner; and the first carrier frequency set includes a maximum set of at least one carrier frequency combination supportable by the terminal device, or at least one carrier frequency combination supportable by the terminal device.

Exemplarily, the first carrier frequency set includes the maximum set of at least one carrier frequency combination supportable by the terminal device. In a case that the first carrier frequency set includes the maximum set {F1, F2, F3} supportable by the terminal device for receiving the positioning signals in a simultaneous manner, the terminal device may support any subset of the maximum set for receiving the positioning signals in a simultaneous manner, for example, a combination 2 {F1, F2}, a combination 3 {F1, F3}, and a combination 4 {F2, F3}, in which F1, F2, and F3 represent three carrier frequencies respectively, being 800 MHz, 1.5 GHz, and 2.8 GHz respectively.

Exemplarily, the first carrier frequency set includes the at least one carrier frequency combination supportable by the terminal device. At this time, the terminal device only supports the reported carrier frequency combination for receiving the positioning signals in a simultaneous manner; and the unreported carrier frequency combination indicates that the terminal device does not support the unreported carrier frequency combination for receiving the positioning signals in a simultaneous manner. For example, the first carrier frequency set includes: the combination 1 {F1, F2} and the combination 2 {F1, F3}. It indicates that the carrier frequency combinations supported by the terminal device for receiving the positioning signals in a simultaneous manner are the combination 1 {F 1, F2} and the combination 2 {F 1, F3}, and the carrier frequency combinations not supported by the terminal device for receiving the positioning signals in a simultaneous manner are the combination 3 {F1, F2, F3}, the combination 4 {F2, F3}, etc.

In some embodiments, the third carrier frequency set includes:
a maximum set of at least one carrier frequency combination supportable by the terminal device; or
at least one carrier frequency combination supportable by the terminal device.

In this embodiment of the present disclosure, the terminal device sends the positioning capability information to the network device, the positioning capability information is configured to indicate the information of the capability of the terminal device to transmit the multi-carrier-frequency positioning signals; and the positioning capability information includes capability information about receiving the multi-carrier-frequency positioning signals by the terminal device.

The capability information about receiving the multi-carrier-frequency positioning signals by the terminal device includes the third carrier frequency set supported by the terminal device to be configured for receiving the positioning signals; and the third carrier frequency set includes a maximum set of at least one carrier frequency combination supportable by the terminal device, or at least one carrier frequency combination supportable by the terminal device.

Exemplarily, the third carrier frequency set includes the maximum set of at least one carrier frequency combination supportable by the terminal device. In a case that the third carrier frequency set includes the maximum set {F1, F2, F3} supportable by the terminal device, the terminal device may support any subset of the maximum set, for example, a combination 2 {F1, F2}, a combination 3 {F1, F3}, and a combination 4 {F2, F3}, in which F1, F2, and F3 represent three carrier frequencies respectively, being 800 MHz, 1.5 GHz, and 2.8 GHz respectively.

Exemplarily, the third carrier frequency set includes at least one carrier frequency combination supportable by the terminal device. At this time, the terminal device only supports the reported carrier frequency combination, and the unreported carrier frequency combination indicates that the terminal device does not support the unreported carrier frequency combination. For example, the third carrier frequency set includes: the combination 1 {F 1, F2} and the combination 2 {F 1, F3}. It indicates that the terminal device only supports the combination 1 {F1, F2} and the combination 2 {F 1, F3}, and does not support the combination 3 {F1, F2, F3}, the combination 4 {F2, F3}, etc.

In some embodiments, the second carrier frequency set includes:
a maximum set of at least one carrier frequency combination not supportable by the terminal device; or
at least one carrier frequency combination not supportable by the terminal device.

In this embodiment of the present disclosure, the terminal device sends the positioning capability information to the network device, the positioning capability information is configured to indicate the information of the capability of the terminal device to transmit the multi-carrier-frequency positioning signals; and the positioning capability information includes capability information about receiving the multi-carrier-frequency positioning signals by the terminal device.

The capability information about receiving the multi-carrier-frequency positioning signals by the terminal device includes the second carrier frequency set supported by the terminal device for receiving the positioning signals in a non-simultaneous manner; and the second carrier frequency set includes a maximum set of at least one carrier frequency combination not supportable by the terminal device, or at least one carrier frequency combination not supportable by the terminal device.

Exemplarily, the second carrier frequency set includes the maximum set of at least one carrier frequency combination not supportable by the terminal device for receiving the positioning signals in a simultaneous manner. In a case that the second carrier frequency set includes the maximum set {F1, F2, F3} not supportable by the terminal device for receiving the positioning signals in a simultaneous manner, the terminal device does not support any subset of the maximum set for receiving the positioning signals in a simultaneous manner, for example, a combination 2 {F 1, F2}, a combination 3 {F1, F3}, and a combination 4 {F2, F3}, in which F1, F2, and F3 represent three carrier frequencies respectively, being 800 MHz, 1.5 GHz, and 2.8 GHz respectively.

Exemplarily, the second carrier frequency set includes the at least one carrier frequency combination not supportable by the terminal device. At this time, the terminal device does not support the reported carrier frequency combinations for receiving the positioning signals in a simultaneous manner; and the unreported carrier frequency combination indicates that the terminal device may support the unreported carrier frequency combinations for receiving the positioning signals in a simultaneous manner. For example, the second carrier frequency set includes: the combination 1 {F1, F2} and the combination 2 {F1, F3}. It indicates that the carrier frequency combinations not supportable by the terminal device for receiving the positioning signals in a simultaneous manner are the combination 1 {F1, F2} and the combination 2 {F1, F3}, and the carrier frequency combinations supportable by the terminal device for receiving the positioning signals in a simultaneous manner are the combination 3 {F1, F2, F3}, the combination 4 {F2, F3}, etc.

In some embodiments, the simultaneous manner is that there is at least one overlapping symbol and/or slot between positioning signals on a plurality of carrier frequencies for the multi-carrier-frequency positioning signals in a time domain, or that a time domain interval between positioning signals on a plurality of carrier frequencies for the multi-carrier-frequency positioning signals is smaller than a first specific number of symbols and/or slots.

It is to be understood that, for the number of carrier frequencies supported by the terminal device for receiving the positioning signals in the simultaneous manner, the simultaneous receiving may be that there is at least one overlapping symbol and/or slot between the positioning signals on the plurality of carrier frequencies, that are supported for receiving, in the time domain, or that the time domain interval between the positioning signals on the plurality of carrier frequencies, that are supported for receiving, is smaller than the first specific number of symbols and/or slots.

It is to be understood that, for the first carrier frequency set supported by the terminal device for receiving the positioning signals in the simultaneous manner, the simultaneous receiving may be that there is at least one overlapping symbol and/or slot between the positioning signals on the plurality of carrier frequencies of the first carrier frequency set, that is supported for receiving, in the time domain, or that the time domain interval between the positioning signals on the plurality of carrier frequencies in the first carrier frequency set, that is supported for receiving, is smaller than the first specific number of symbols and/or slots.

In some embodiments, the positioning capability information includes the first specific number.

The first specific number may be set as needed, which is not specifically limited in the embodiments of the present disclosure.

In some embodiments, the non-simultaneous manner is that a time domain interval between positioning signals on a plurality of carrier frequencies for the multi-carrier-frequency positioning signals is greater than a second specific number of symbols and/or slots.

It is to be understood that, for the number of carrier frequencies supported by the terminal device for receiving the positioning signals in the non-simultaneous manner, the non-simultaneous receiving may be that the time domain interval between the positioning signals on the plurality of carrier frequencies, that are supported for receiving, is greater than the second specific number of symbols and/or slots.

It is to be understood that, for the second carrier frequency set supported by the terminal device for receiving the positioning signals in the non-simultaneous manner, the non-simultaneous receiving may be that the time domain interval between the positioning signals on the plurality of carrier frequencies in the second carrier frequency set, that is supported for receiving, is greater than the second specific number of symbols and/or slots.

In some embodiments, the positioning capability information includes the second specific number.

The second specific number may be set as needed, which is not specifically limited in the embodiments of the present disclosure.

In an embodiment of the present disclosure, the first specific number may be equal to the second specific number.

In some embodiments, the capability information about sending the multi-carrier-frequency positioning signals by the terminal device includes at least one of:
a number of senders of the terminal device;
a carrier frequency and/or a bandwidth of a sending filter of the terminal device;
a number of carrier frequencies supported by the terminal device for simultaneous sending positioning signals;
a number of carrier frequencies supported by the terminal device for sending the positioning signals in a non-simultaneous manner;
a first carrier frequency set supported by the terminal device for sending the positioning signals in a simultaneous manner;
a second carrier frequency set supported by the terminal device for sending the positioning signals in a non-simultaneous manner;
a number of carrier frequencies supported by the terminal device to be configured for sending the positioning signals; or
a third carrier frequency set supported by the terminal device to be configured for sending the positioning signals.

In this embodiment of the present disclosure, the terminal device sends the positioning capability information to the network device, the positioning capability information is configured to indicate the information of the capability of the terminal device to transmit the multi-carrier-frequency positioning signals; and the positioning capability information includes the capability information about sending the multi-carrier-frequency positioning signals by the terminal device.

One sender may correspond to at least one sending filter.

The plurality of carrier frequencies supported by the terminal device to be configured for sending the positioning signals may be understood as that the plurality of carrier frequencies that can be configured for the terminal device for sending the positioning signals. After the plurality of carrier frequencies are configured, at least one of sending the positioning signals on the different carrier frequencies in a simultaneous manner or non-simultaneous manner is supported.

The capability information about sending the multi-carrier-frequency positioning signals by the terminal device includes the number of senders of the terminal device, or includes the carrier frequency and/or the bandwidth of the sending filter of the terminal device, or includes the number of carrier frequencies supported by the terminal device for sending the positioning signals in a simultaneous manner, or includes the number of carrier frequencies supported by the terminal device for sending the positioning signals in a non-simultaneous manner, or includes the first carrier frequency set supported by the terminal device for sending the positioning signals in a simultaneous manner, or includes the second carrier frequency set supported by the terminal device for sending the positioning signals in a non-simultaneous manner, or includes the number of carrier frequencies supported by the terminal device to be configured for sending the positioning signals, or includes the third carrier frequency set supported by the terminal device to be configured for sending the positioning signals, or includes the number of senders of the terminal device and the number of carrier frequencies supported by the terminal device for sending the positioning signals in a simultaneous manner, etc.

The capability information about sending the multi-carrier-frequency positioning signals by the terminal device includes one or more of: the number of senders of the terminal device, the carrier frequency and/or the bandwidth of the sending filter of the terminal device, the number of carrier frequencies supported by the terminal device for sending the positioning signals in a simultaneous manner, the number of carrier frequencies supported by the terminal device for sending the positioning signals in a non-simultaneous manner, the first carrier frequency set supported by the terminal device for sending the positioning signals in a simultaneous manner, the second carrier frequency set supported by the terminal device for sending the positioning signals in a non-simultaneous manner, the number of carrier frequencies supported by the terminal device to be configured for sending the positioning signals, or the third carrier frequency set supported by the terminal device to be configured for sending the positioning signals.

In some embodiments, the first carrier frequency set includes:
a maximum set of at least one carrier frequency combination supportable by the terminal device; or
at least one carrier frequency combination supportable by the terminal device.

In this embodiment of the present disclosure, the terminal device sends the positioning capability information to the network device, the positioning capability information is configured to indicate the information of the capability of the terminal device to transmit the multi-carrier-frequency positioning signals; and the positioning capability information includes the capability information about sending the multi-carrier-frequency positioning signals by the terminal device.

The capability information about sending the multi-carrier-frequency positioning signals by the terminal device includes the first carrier frequency set supported by the terminal device for sending the positioning signals in a simultaneous manner; and the first carrier frequency set includes a maximum set of at least one carrier frequency combination supportable by the terminal device, or at least one carrier frequency combination supportable by the terminal device.

Exemplarily, the first carrier frequency set includes the maximum set of at least one carrier frequency combination supportable by the terminal device for sending the positioning signals in a simultaneous manner. In a case that the first carrier frequency set includes the maximum set {F1, F2, F3} supportable by the terminal device for sending the positioning signals in a simultaneous manner, the terminal device may support any subset of the maximum set for sending the positioning signals in a simultaneous manner, for example, a combination 2 {F1, F2}, a combination 3 {F1, F3}, and a combination 4 {F2, F3}, in which F1, F2, and F3 represent three carrier frequencies respectively, being 800 MHz, 1.5 GHz, and 2.8 GHz respectively.

Exemplarily, the first carrier frequency set includes the at least one carrier frequency combination supportable by the terminal device. At this time, the terminal device only supports the reported carrier frequency combination for sending the positioning signals in a simultaneous manner; and the unreported carrier frequency combination indicates that the terminal device does not support the unreported carrier frequency combination for sending the positioning signals in a simultaneous manner. For example, the first carrier frequency set includes: the combination 1 {F1, F2} and the combination 2 {F1, F3}. It indicates that the carrier frequency combinations supportable by the terminal device for sending the positioning signals in a simultaneous manner are the combination 1 {F1, F2} and the combination 2 {F1, F3}, and the carrier frequency combinations not supportable by the terminal device for sending the positioning signals in a simultaneous manner are the combination 3 {F1, F2, F3}, the combination 4 {F2, F3}, etc.

In some embodiments, the third carrier frequency set includes:
a maximum set of at least one carrier frequency combination supportable by the terminal device; or
at least one carrier frequency combination supportable by the terminal device.

In this embodiment of the present disclosure, the terminal device sends the positioning capability information to the network device, the positioning capability information is configured to indicate the information of the capability of the terminal device to transmit the multi-carrier-frequency positioning signals; and the positioning capability information includes the capability information about sending the multi-carrier-frequency positioning signals by the terminal device.

The capability information about sending the multi-carrier-frequency positioning signals by the terminal device includes the third carrier frequency set supported by the terminal device for sending the positioning signals; and the third carrier frequency set includes a maximum set of at least one carrier frequency combination supportable by the terminal device, or at least one carrier frequency combination supportable by the terminal device.

Exemplarily, the third carrier frequency set includes the maximum set of at least one carrier frequency combination supportable by the terminal device for sending the positioning signals. In a case that the third carrier frequency set includes the maximum set {F1, F2, F3} supportable by the terminal device for sending the positioning signals, the terminal device may support any subset of the maximum set for sending the positioning signals, for example, a combination 2 {F1, F2}, a combination 3 {F1, F3}, and a combination 4 {F2, F3}, in which F1, F2, and F3 represent three carrier frequencies respectively, being 800 MHz, 1.5 GHz, and 2.8 GHz respectively.

Exemplarily, the third carrier frequency set includes the at least one carrier frequency combination supportable by the terminal device. At this time, the terminal device only supports the reported carrier frequency combination for sending the positioning signals; and the unreported carrier frequency combination indicates that the terminal device does not support the unreported carrier frequency combination for sending the positioning signals. For example, the third carrier frequency set includes: the combination 1 {F1, F2} and the combination 2 {F1, F3}. It indicates that the carrier frequency combinations supportable by the terminal device for sending the positioning signals are the combination 1 {F1, F2} and the combination 2 {F1, F3}, and the carrier frequency combinations not supportable by the terminal device for sending the positioning signals are the combination 3 {F1, F2, F3}, the combination 4 {F2, F3}, etc.

In some embodiments, the second carrier frequency set includes:
a maximum set of at least one carrier frequency combination not supportable by the terminal device; or
at least one carrier frequency combination not supportable by the terminal device.

In this embodiment of the present disclosure, the terminal device sends the positioning capability information to the network device, the positioning capability information is configured to indicate the information of the capability of the terminal device to transmit the multi-carrier-frequency positioning signals; and the positioning capability information includes the capability information about sending the multi-carrier-frequency positioning signals by the terminal device.

The capability information about sending the multi-carrier-frequency positioning signals by the terminal device includes the second carrier frequency set supported by the terminal device for sending the positioning signals in a non-simultaneous manner; and the second carrier frequency set includes a maximum set of at least one carrier frequency combination not supportable by the terminal device, or at least one carrier frequency combination not supportable by the terminal device.

Exemplarily, the second carrier frequency set includes the maximum set of the at least one carrier frequency combination not supportable by the terminal device. In a case that the second carrier frequency set includes the maximum set {F1, F2, F3} not supportable by the terminal device for sending the positioning signals in a simultaneous manner, the terminal device does not support any subset of the maximum set for sending the positioning signals in a simultaneous manner, for example, a combination 2 {F1, F2}, a combination 3 {F1, F3}, and a combination 4 {F2, F3}, in which F1, F2, and F3 represent three carrier frequencies respectively, being 800 MHz, 1.5 GHz, and 2.8 GHz respectively.

Exemplarily, the second carrier frequency set includes the at least one carrier frequency combination not supportable by the terminal device. At this time, the terminal device does not support the reported carrier frequency combination for sending the positioning signals in a simultaneous manner; and the unreported carrier frequency combination indicates that the terminal device may support the unreported carrier frequency combinations for sending the positioning signals in a simultaneous manner. For example, the second carrier frequency set includes: the combination 1 {F1, F2} and the combination 2 {F1, F3}. It indicates that the carrier frequency combinations not supportable by the terminal device for sending the positioning signals in a simultaneous manner are the combination 1 {F1, F2} and the combination 2 {F1, F3}, and the carrier frequency combinations supportable by the terminal device for sending the positioning signals in a simultaneous manner are the combination 3 {F1, F2, F3}, the combination 4 {F2, F3}, etc.

In some embodiments, the simultaneous manner is that there is at least one overlapping symbol and/or slot between positioning signals on a plurality of carrier frequencies for the multi-carrier-frequency positioning signals in a time domain, or that a time domain interval between positioning signals on a plurality of carrier frequencies for the multi-carrier-frequency positioning signals is smaller than a first specific number of symbols and/or slots.

It is to be understood that, for the number of carrier frequencies supported by the terminal device for sending the positioning signals in a simultaneous manner, the simultaneous sending may be that there is at least one overlapping symbol and/or slot between the positioning signals on the plurality of carrier frequencies, that are supported for sending, in the time domain, or that the time domain interval between the positioning signals on the plurality of carrier frequencies, that are supported for sending, is smaller than the first specific number of symbols and/or slots.

It is to be understood that, for the first carrier frequency set supported by the terminal device for sending the positioning signals in a simultaneous manner, the simultaneous sending may be that there is at least one overlapping symbol and/or slot between the positioning signals on the plurality of carrier frequencies in the first carrier frequency set, that is supported for sending, in the time domain, or that the time domain interval between the positioning signals on the plurality of carrier frequencies in the first carrier frequency set, that is supported for sending, is smaller than the first specific number of symbols and/or slots.

In some embodiments, the positioning capability information includes the first specific number.

The first specific number may be set as needed, which is not specifically limited in the embodiments of the present disclosure.

In some embodiments, the non-simultaneous manner is that a time domain interval between positioning signals on a plurality of carrier frequencies for the multi-carrier-frequency positioning signals is greater than a second specific number of symbols and/or slots.

It is to be understood that, for the number of carrier frequencies supported by the terminal device for sending the positioning signals in a non-simultaneous manner, the non-simultaneous sending may be that the time domain interval between the positioning signals on the plurality of carrier frequencies, that are supported for sending, is greater than the second specific number of symbols and/or slots.

It is to be understood that, for the second carrier frequency set supported by the terminal device for sending the positioning signals in a non-simultaneous manner, the non-simultaneous sending may be that the time domain interval between the positioning signals on the plurality of carrier frequencies in the second carrier frequency set, that is supported for sending, is greater than the second specific number of symbols and/or slots.

In some embodiments, the positioning capability information includes the second specific number.

The second specific number may be set as needed, which is not specifically limited in the embodiments of the present disclosure.

In an embodiment of the present disclosure, the first specific number may be equal to the second specific number.

In some embodiments, the network device includes a core network device and/or an access network device.

The core network device in the present disclosure may include a location management function network element. Optionally, the location management function network element includes a location server. The location server may be implemented as any one of: a location management function (LMF), an enhanced serving mobile location centre (E-SMLC), secure user plane location (SUPL), and a SUPL location platform (SUPL SLP).

The access network device includes a base station or a transmission and reception point (TRP), etc.

Referring to FIG. 3, FIG. 3 is a flow chart of a method for determining another multi-carrier-frequency carrier phase positioning capability provided by an embodiment of the present disclosure.

As shown in FIG. 3, the method is applied to a network device, and may include, but is not limited to, the following steps.

S31, positioning capability information sent by a terminal device is received, in which the positioning capability information is configured to indicate capability information about transmitting multi-carrier-frequency positioning signals.

In the embodiments of the present disclosure, the terminal device may send the positioning capability information to the network device, and the positioning capability information is configured to indicate the capability information about transmitting multi-carrier-frequency positioning signals, so as to report to the network device that the terminal device supports the transmission of the multi-carrier-frequency positioning signal and supports which carrier frequency combination for the transmission of the multi-carrier-frequency positioning signals.

Based on this, between the terminal device and the network device, according to the positioning capability information sent by the terminal device to the network device, it is determined that the terminal device has the capability to transmit the multi-carrier-frequency positioning signals, and the positioning signals are sent, received and measured on multiple carrier frequencies supported by the terminal device. Therefore, the flexibility of the terminal device and the accuracy of positioning measurement can be improved.

The positioning signals are sent, received and measured on at least two carrier frequencies; and the at least two carrier frequencies are used for aggregating to transmit the same positioning signal, or are used to independently transmit different positioning signals. If the at least two carrier frequencies are aggregated to transmit the same positioning signal, it is necessary to measure the positioning signal on the at least two carrier frequencies to obtain a measurement result. If different positioning signals are transmitted independently, it is only necessary to measure the positioning signal on one carrier frequency separately to obtain one measurement result.

In some embodiments, the positioning signals include a positioning reference signal (PRS) and a sounding reference signal (SRS).

In this embodiment of the present disclosure, the terminal device sends the positioning capability information to the network device, the positioning capability information is configured to indicate the information of the capability of the terminal device to transmit the multi-carrier-frequency positioning signals. The positioning signals may include the PRS and the SRS.

Of course, in the embodiments of the present disclosure, the positioning signals may also be signals other than the PRS and the SRS; and with the continuous progress of technology, the positioning signals may also be other new signals for positioning, which is not specifically limited in the embodiments of the present disclosure.

In some embodiments, the positioning capability information includes at least one of:
capability information about receiving the multi-carrier-frequency positioning signals by the terminal device; or
capability information about sending the multi-carrier-frequency positioning signal by the terminal device.

In this embodiment of the present disclosure, the terminal device sends the positioning capability information to the network device, the positioning capability information is configured to indicate the information of the capability of the terminal device to transmit the multi-carrier-frequency positioning signals. The positioning capability information includes capability information about receiving the multi-carrier-frequency positioning signals by the terminal device, or includes capability information about sending the multi-carrier-frequency positioning signals by the terminal device, or includes capability information about receiving and sending the multi-carrier-frequency positioning signals by the terminal device.

In some embodiments, the capability information about receiving the multi-carrier-frequency positioning signals by the terminal device includes at least one of:
a number of receivers of the terminal device;
a carrier frequency and/or a bandwidth of a receiving filter of the terminal device;
a number of carrier frequencies supported by the terminal device for receiving the positioning signals in a simultaneous manner;
a number of carrier frequencies supported by the terminal device for receiving the positioning signals in a non-simultaneous manner;
a first carrier frequency set supported by the terminal device for receiving the positioning signals in a simultaneous manner;
a second carrier frequency set supported by the terminal device for receiving the positioning signals in a non-simultaneous manner;
a number of carrier frequencies supported by the terminal device to be configured for receiving the positioning signals; or
a third carrier frequency set supported by the terminal device to be configured for receiving the positioning signals.

In this embodiment of the present disclosure, the terminal device sends the positioning capability information to the network device, the positioning capability information is configured to indicate the information of the capability of the terminal device to transmit the multi-carrier-frequency positioning signals; and the positioning capability information includes capability information about receiving the multi-carrier-frequency positioning signals by the terminal device.

One receiver may correspond to at least one receiving filter.

The plurality of carrier frequencies supported by the terminal device to be configured for receiving the positioning signals may be understood as the plurality of carrier frequencies that can be configured for the terminal device for receiving the positioning signals. After the plurality of carrier frequencies are configured, at least one of receiving the positioning signals on different carrier frequencies in a simultaneous manner or non-simultaneous manner is supported.

The capability information about receiving the multi-carrier-frequency positioning signals by the terminal device includes the number of receivers of the terminal device, or includes the carrier frequency and/or the bandwidth of the receiving filter of the terminal device, or includes the number of carrier frequencies supported by the terminal device for receiving the positioning signals in a simultaneous manner, or includes the number of carrier frequencies supported by the terminal device for receiving the positioning signals in the non-simultaneous manner, or includes the first carrier frequency set supported by the terminal device for receiving the positioning signals in a simultaneous manner, or includes the second carrier frequency set supported by the terminal device for receiving the positioning signals in a non-simultaneous manner, or includes the number of carrier frequencies supported by the terminal device to be configured for receiving the positioning signals, or includes the third carrier frequency set supported by the terminal device to be configured for receiving the positioning signals, or includes the number of receivers of the terminal device and the number of carrier frequencies supported by the terminal device for receiving the positioning signals in a simultaneous manner, etc.

The capability information about receiving the multi-carrier-frequency positioning signals by the terminal device includes one or more of: the number of receivers of the terminal device, the carrier frequency and/or the bandwidth of the receiving filter of the terminal device, the number of carrier frequencies supported by the terminal device for receiving the positioning signals in a simultaneous manner, the number of carrier frequencies supported by the terminal device for receiving the positioning signals in the non-simultaneous manner, the first carrier frequency set supported by the terminal device for receiving the positioning signals in a simultaneous manner, the second carrier frequency set supported by the terminal device for receiving the positioning signals in a non-simultaneous manner, the number of carrier frequencies supported by the terminal device to be configured for receiving the positioning signals, or the third carrier frequency set supported by the terminal device to be configured for receiving the positioning signals.

In some embodiments, the first carrier frequency set includes:
a maximum set of at least one carrier frequency combination supportable by the terminal device; or
at least one carrier frequency combination supportable by the terminal device.

In this embodiment of the present disclosure, the terminal device sends the positioning capability information to the network device, the positioning capability information is configured to indicate the information of the capability of the terminal device to transmit the multi-carrier-frequency positioning signals; and the positioning capability information includes capability information about receiving the multi-carrier-frequency positioning signals by the terminal device.

The capability information about receiving the multi-carrier-frequency positioning signals by the terminal device includes the first carrier frequency set supported by the terminal device for receiving the positioning signals in a simultaneous manner; and the first carrier frequency set includes a maximum set of at least one carrier frequency combination supportable by the terminal device, or at least one carrier frequency combination supportable by the terminal device.

Exemplarily, the first carrier frequency set includes the maximum set of at least one carrier frequency combination supportable by the terminal device. In a case that the first carrier frequency set includes the maximum set {F1, F2, F3} supportable by the terminal device for receiving the positioning signals in a simultaneous manner, the terminal device may support any subset of the maximum set for receiving the positioning signals in a simultaneous manner, for example, a combination 2 {F1, F2}, a combination 3 {F1, F3}, and a combination 4 {F2, F3}, in which F1, F2, and F3 represent three carrier frequencies respectively, being 800 MHz, 1.5 GHz, and 2.8 GHz respectively.

Exemplarily, the first carrier frequency set includes the at least one carrier frequency combination supportable by the terminal device. At this time, the terminal device only supports the reported carrier frequency combination for receiving the positioning signals in a simultaneous manner; and the unreported carrier frequency combination indicates that the terminal device does not support the unreported carrier frequency combination for receiving the positioning signals in a simultaneous manner. For example, the first carrier frequency set includes: the combination 1 {F1, F2} and the combination 2 {F 1, F3}. It indicates that the carrier frequency combinations supported by the terminal device for receiving the positioning signals in a simultaneous manner are the combination 1 {F 1, F2} and the combination 2 {F 1, F3}, and the carrier frequency combinations not supported by the terminal device for receiving the positioning signals in a simultaneous manner are the combination 3 {F1, F2, F3}, the combination 4 {F2, F3}, etc.

In some embodiments, the third carrier frequency set includes:
a maximum set of at least one carrier frequency combination supportable by the terminal device; or
at least one carrier frequency combination supportable by the terminal device.

In this embodiment of the present disclosure, the terminal device sends the positioning capability information to the network device, the positioning capability information is configured to indicate the information of the capability of the terminal device to transmit the multi-carrier-frequency positioning signals; and the positioning capability information includes capability information about receiving the multi-carrier-frequency positioning signals by the terminal device.

The capability information about receiving the multi-carrier-frequency positioning signals by the terminal device includes the third carrier frequency set supported by the terminal device to be configured for receiving the positioning signals; and the third carrier frequency set includes a maximum set of at least one carrier frequency combination supportable by the terminal device, or at least one carrier frequency combination supportable by the terminal device.

Exemplarily, the third carrier frequency set includes the maximum set of at least one carrier frequency combination supportable by the terminal device. In a case that the third carrier frequency set includes the maximum set {F1, F2, F3} supportable by the terminal device, the terminal device may support any subset of the maximum set, for example, a combination 2 {F1, F2}, a combination 3 {F1, F3}, and a combination 4 {F2, F3}, in which F1, F2, and F3 represent three carrier frequencies respectively, being 800 MHz, 1.5 GHz, and 2.8 GHz respectively.

Exemplarily, the third carrier frequency set includes at least one carrier frequency combination supportable by the terminal device. At this time, the terminal device only supports the reported carrier frequency combination, and the unreported carrier frequency combination indicates that the terminal device does not support the unreported carrier frequency combination. For example, the third carrier frequency set includes: the combination 1 {F 1, F2} and the combination 2 {F 1, F3}. It indicates that the terminal device only supports the combination 1 {F1, F2} and the combination 2 {F 1, F3}, and does not support the combination 3 {F1, F2, F3}, the combination 4 {F2, F3}, etc.

In some embodiments, the second carrier frequency set includes:
a maximum set of at least one carrier frequency combination not supportable by the terminal device; or
at least one carrier frequency combination not supportable by the terminal device.

In this embodiment of the present disclosure, the terminal device sends the positioning capability information to the network device, the positioning capability information is configured to indicate the information of the capability of the terminal device to transmit the multi-carrier-frequency positioning signals; and the positioning capability information includes capability information about receiving the multi-carrier-frequency positioning signals by the terminal device.

The capability information about receiving the multi-carrier-frequency positioning signals by the terminal device includes the second carrier frequency set supported by the terminal device for receiving the positioning signals in a non-simultaneous manner; and the second carrier frequency set includes a maximum set of at least one carrier frequency combination not supportable by the terminal device, or at least one carrier frequency combination not supportable by the terminal device.

Exemplarily, the second carrier frequency set includes the maximum set of at least one carrier frequency combination not supportable by the terminal device for receiving the positioning signals in a simultaneous manner. In a case that the second carrier frequency set includes the maximum set {F1, F2, F3} not supportable by the terminal device for receiving the positioning signals in a simultaneous manner, the terminal device does not support any subset of the maximum set for receiving the positioning signals in a simultaneous manner, for example, a combination 2 {F1, F2}, a combination 3 {F1, F3}, and a combination 4 {F2, F3}, in which F1, F2, and F3 represent three carrier frequencies respectively, being 800 MHz, 1.5 GHz, and 2.8 GHz respectively.

Exemplarily, the second carrier frequency set includes the at least one carrier frequency combination not supportable by the terminal device. At this time, the terminal device does not support the reported carrier frequency combinations for receiving the positioning signals in a simultaneous manner; and the unreported carrier frequency combination indicates that the terminal device may support the unreported carrier frequency combinations for receiving the positioning signals in a simultaneous manner. For example, the second carrier frequency set includes: the combination 1 {F1, F2} and the combination 2 {F1, F3}. It indicates that the carrier frequency combinations not supportable by the terminal device for receiving the positioning signals in a simultaneous manner are the combination 1 {F1, F2} and the combination 2 {F1, F3}, and the carrier frequency combinations supportable by the terminal device for receiving the positioning signals in a simultaneous manner are the combination 3 {F1, F2, F3}, the combination 4 {F2, F3}, etc.

In some embodiments, the simultaneous manner is that there is at least one overlapping symbol and/or slot between positioning signals on a plurality of carrier frequencies for the multi-carrier-frequency positioning signals in a time domain, or that a time domain interval between positioning signals on a plurality of carrier frequencies for the multi-carrier-frequency positioning signals is smaller than a first specific number of symbols and/or slots.

It is to be understood that, for the number of carrier frequencies supported by the terminal device for receiving the positioning signals in the simultaneous manner, the simultaneous receiving may be that there is at least one overlapping symbol and/or slot between the positioning signals on the plurality of carrier frequencies, that are supported for receiving, in the time domain, or that the time domain interval between the positioning signals on the plurality of carrier frequencies, that are supported for receiving, is smaller than the first specific number of symbols and/or slots.

It is to be understood that, for the first carrier frequency set supported by the terminal device for receiving the positioning signals in the simultaneous manner, the simultaneous receiving may be that there is at least one overlapping symbol and/or slot between the positioning signals on the plurality of carrier frequencies of the first carrier frequency set, that is supported for receiving, in the time domain, or that the time domain interval between the positioning signals on the plurality of carrier frequencies in the first carrier frequency set, that is supported for receiving, is smaller than the first specific number of symbols and/or slots.

In some embodiments, the positioning capability information includes the first specific number.

The first specific number may be set as needed, which is not specifically limited in the embodiments of the present disclosure.

In some embodiments, the non-simultaneous manner is that a time domain interval between positioning signals on a plurality of carrier frequencies for the multi-carrier-frequency positioning signals is greater than a second specific number of symbols and/or slots.

It is to be understood that, for the number of carrier frequencies supported by the terminal device for receiving the positioning signals in the non-simultaneous manner, the non-simultaneous receiving may be that the time domain interval between the positioning signals on the plurality of carrier frequencies, that are supported for receiving, is greater than the second specific number of symbols and/or slots.

It is to be understood that, for the second carrier frequency set supported by the terminal device for receiving the positioning signals in the non-simultaneous manner, the non-simultaneous receiving may be that the time domain interval between the positioning signals on the plurality of carrier frequencies in the second carrier frequency set, that is supported for receiving, is greater than the second specific number of symbols and/or slots.

In some embodiments, the positioning capability information includes the second specific number.

The second specific number may be set as needed, which is not specifically limited in the embodiments of the present disclosure.

In an embodiment of the present disclosure, the first specific number may be equal to the second specific number.

In some embodiments, the capability information about sending the multi-carrier-frequency positioning signals by the terminal device includes at least one of:
a number of senders of the terminal device;
a carrier frequency and/or a bandwidth of a sending filter of the terminal device;
a number of carrier frequencies supported by the terminal device for simultaneous sending positioning signals;
a number of carrier frequencies supported by the terminal device for sending the positioning signals in a non-simultaneous manner;
a first carrier frequency set supported by the terminal device for sending the positioning signals in a simultaneous manner;
a second carrier frequency set supported by the terminal device for sending the positioning signals in a non-simultaneous manner;
a number of carrier frequencies supported by the terminal device to be configured for sending the positioning signals; or
a third carrier frequency set supported by the terminal device to be configured for sending the positioning signals.

In this embodiment of the present disclosure, the terminal device sends the positioning capability information to the network device, the positioning capability information is configured to indicate the information of the capability of the terminal device to transmit the multi-carrier-frequency positioning signals; and the positioning capability information includes capability information about sending the multi-carrier-frequency positioning signals by the terminal device.

One sender may correspond to at least one sending filter.

The plurality of carrier frequencies supported by the terminal device to be configured for sending the positioning signals may be understood as that the plurality of carrier frequencies that can be configured for the terminal device for sending the positioning signals. After the plurality of carrier frequencies are configured, at least one of sending the positioning signals on the different carrier frequencies in a simultaneous manner or non-simultaneous manner is supported.

The capability information about sending the multi-carrier-frequency positioning signals by the terminal device includes the number of senders of the terminal device, or includes the carrier frequency and/or the bandwidth of the sending filter of the terminal device, or includes the number of carrier frequencies supported by the terminal device for sending the positioning signals in a simultaneous manner, or includes the number of carrier frequencies supported by the terminal device for sending the positioning signals in a non-simultaneous manner, or includes the first carrier frequency set supported by the terminal device for sending the positioning signals in a simultaneous manner, or includes the second carrier frequency set supported by the terminal device for sending the positioning signals in a non-simultaneous manner, or includes the number of carrier frequencies supported by the terminal device to be configured for sending the positioning signals, or includes the third carrier frequency set supported by the terminal device to be configured for sending the positioning signals, or includes the number of senders of the terminal device and the number of carrier frequencies supported by the terminal device for sending the positioning signals in a simultaneous manner, etc.

The capability information about sending the multi-carrier-frequency positioning signals by the terminal device includes one or more of: the number of senders of the terminal device, the carrier frequency and/or the bandwidth of the sending filter of the terminal device, the number of carrier frequencies supported by the terminal device for sending the positioning signals in a simultaneous manner, the number of carrier frequencies supported by the terminal device for sending the positioning signals in a non-simultaneous manner, the first carrier frequency set supported by the terminal device for sending the positioning signals in a simultaneous manner, the second carrier frequency set supported by the terminal device for sending the positioning signals in a non-simultaneous manner, the number of carrier frequencies supported by the terminal device to be configured for sending the positioning signals, or the third carrier frequency set supported by the terminal device to be configured for sending the positioning signals.

In some embodiment, the first carrier frequency set includes:
a maximum set of at least one carrier frequency combination supportable by the terminal device; or
at least one carrier frequency combination supportable by the terminal device.

In this embodiment of the present disclosure, the terminal device sends the positioning capability information to the network device, the positioning capability information is configured to indicate the information of the capability of the terminal device to transmit the multi-carrier-frequency positioning signals; and the positioning capability information includes capability information about sending the multi-carrier-frequency positioning signals by the terminal device.

The capability information about sending the multi-carrier-frequency positioning signals by the terminal device includes the first carrier frequency set supported by the terminal device for sending the positioning signals in a simultaneous manner; and the first carrier frequency set includes a maximum set of at least one carrier frequency combination supportable by the terminal device, or at least one carrier frequency combination supportable by the terminal device.

Exemplarily, the first carrier frequency set includes the maximum set of at least one carrier frequency combination supportable by the terminal device for sending the positioning signals in a simultaneous manner. In a case that the first carrier frequency set includes the maximum set {F1, F2, F3} supportable by the terminal device for sending the positioning signals in a simultaneous manner, the terminal device may support any subset of the maximum set for sending the positioning signals in a simultaneous manner, for example, a combination 2 {F1, F2}, a combination 3 {F1, F3}, and a combination 4 {F2, F3}, in which F1, F2, and F3 represent three carrier frequencies respectively, being 800 MHz, 1.5 GHz, and 2.8 GHz respectively.

Exemplarily, the first carrier frequency set includes the at least one carrier frequency combination supportable by the terminal device. At this time, the terminal device only supports the reported carrier frequency combination for sending the positioning signals in a simultaneous manner; and the unreported carrier frequency combination indicates that the terminal device does not support the unreported carrier frequency combination for sending the positioning signals in a simultaneous manner. For example, the first carrier frequency set includes: the combination 1 {F1, F2} and the combination 2 {F1, F3}. It indicates that the carrier frequency combinations supportable by the terminal device for sending the positioning signals in a simultaneous manner are the combination 1 {F1, F2} and the combination 2 {F1, F3}, and the carrier frequency combinations not supportable by the terminal device for sending the positioning signals in a simultaneous manner are the combination 3 {F1, F2, F3}, the combination 4 {F2, F3}, etc.

In some embodiments, the third carrier frequency set includes:
a maximum set of at least one carrier frequency combination supportable by the terminal device; or
at least one carrier frequency combination supportable by the terminal device.

In this embodiment of the present disclosure, the terminal device sends the positioning capability information to the network device, the positioning capability information is configured to indicate the information of the capability of the terminal device to transmit the multi-carrier-frequency positioning signals; and the positioning capability information includes capability information about sending the multi-carrier-frequency positioning signals by the terminal device.

The capability information about sending the multi-carrier-frequency positioning signals by the terminal device includes the third carrier frequency set supported by the terminal device for sending the positioning signals; and the third carrier frequency set includes a maximum set of at least one carrier frequency combination supportable by the terminal device, or at least one carrier frequency combination supportable by the terminal device.

Exemplarily, the third carrier frequency set includes the maximum set of at least one carrier frequency combination supportable by the terminal device for sending the positioning signals. In a case that the third carrier frequency set includes the maximum set {F1, F2, F3} supportable by the terminal device for sending the positioning signals, the terminal device may support any subset of the maximum set for sending the positioning signals, for example, a combination 2 {F1, F2}, a combination 3 {F1, F3}, and a combination 4 {F2, F3}, in which F1, F2, and F3 represent three carrier frequencies respectively, being 800 MHz, 1.5 GHz, and 2.8 GHz respectively.

Exemplarily, the third carrier frequency set includes the at least one carrier frequency combination supportable by the terminal device. At this time, the terminal device only supports the reported carrier frequency combination for sending the positioning signals; and the unreported carrier frequency combination indicates that the terminal device does not support the unreported carrier frequency combination for sending the positioning signals. For example, the third carrier frequency set includes: the combination 1 {F1, F2} and the combination 2 {F1, F3}. It indicates that the carrier frequency combinations supportable by the terminal device for sending the positioning signals are the combination 1 {F1, F2} and the combination 2 {F1, F3}, and the carrier frequency combinations not supportable by the terminal device for sending the positioning signals are the combination 3 {F1, F2, F3}, the combination 4 {F2, F3}, etc.

In some embodiments, the second carrier frequency set includes:
a maximum set of at least one carrier frequency combination not supportable by the terminal device; or
at least one carrier frequency combination not supportable by the terminal device.

In this embodiment of the present disclosure, the terminal device sends the positioning capability information to the network device, the positioning capability information is configured to indicate the information of the capability of the terminal device to transmit the multi-carrier-frequency positioning signals; and the positioning capability information includes capability information about sending the multi-carrier-frequency positioning signals by the terminal device.

The capability information about sending the multi-carrier-frequency positioning signals by the terminal device includes the second carrier frequency set supported by the terminal device for sending the positioning signals in a non-simultaneous manner; and the second carrier frequency set includes a maximum set of at least one carrier frequency combination not supportable by the terminal device, or at least one carrier frequency combination not supportable by the terminal device.

Exemplarily, the second carrier frequency set includes the maximum set of the at least one carrier frequency combination not supportable by the terminal device. In a case that the second carrier frequency set includes the maximum set {F1, F2, F3} not supportable by the terminal device for sending the positioning signals in a simultaneous manner, the terminal device does not support any subset of the maximum set for sending the positioning signals in a simultaneous manner, for example, a combination 2 {F1, F2}, a combination 3 {F1, F3}, and a combination 4 {F2, F3}, in which F1, F2, and F3 represent three carrier frequencies respectively, being 800 MHz, 1.5 GHz, and 2.8 GHz respectively.

Exemplarily, the second carrier frequency set includes the at least one carrier frequency combination not supportable by the terminal device. At this time, the terminal device does not support the reported carrier frequency combination for sending the positioning signals in a simultaneous manner; and the unreported carrier frequency combination indicates that the terminal device may support the unreported carrier frequency combinations for sending the positioning signals in a simultaneous manner. For example, the second carrier frequency set includes: the combination 1 {F 1, F2} and the combination 2 {F1, F3}. It indicates that the carrier frequency combinations not supportable by the terminal device for sending the positioning signals in a simultaneous manner are the combination 1 {F1, F2} and the combination 2 {F1, F3}, and the carrier frequency combinations supportable by the terminal device for sending the positioning signals in a simultaneous manner are the combination 3 {F1, F2, F3}, the combination 4 {F2, F3}, etc.

In some embodiments, the simultaneous manner is that there is at least one overlapping symbol and/or slot between positioning signals on a plurality of carrier frequencies for the multi-carrier-frequency positioning signals in a time domain, or that a time domain interval between positioning signals on a plurality of carrier frequencies for the multi-carrier-frequency positioning signals is smaller than a first specific number of symbols and/or slots.

It is to be understood that, for the number of carrier frequencies supported by the terminal device for sending the positioning signals in a simultaneous manner, the simultaneous sending may be that there is at least one overlapping symbol and/or slot between the positioning signals on the plurality of carrier frequencies, that are supported for sending, in the time domain, or that the time domain interval between the positioning signals on the plurality of carrier frequencies, that are supported for sending, is smaller than the first specific number of symbols and/or slots.

It is to be understood that, for the first carrier frequency set supported by the terminal device for sending the positioning signals in a simultaneous manner, the simultaneous sending may be that there is at least one overlapping symbol and/or slot between the positioning signals on the plurality of carrier frequencies in the first carrier frequency set, that is supported for sending, in the time domain, or that the time domain interval between the positioning signals on the plurality of carrier frequencies in the first carrier frequency set, that is supported for sending, is smaller than the first specific number of symbols and/or slots.

In some embodiments, the positioning capability information includes the first specific number.

The first specific number may be set as needed, which is not specifically limited in the embodiments of the present disclosure.

In some embodiments, the non-simultaneous manner is that a time domain interval between positioning signals on a plurality of carrier frequencies for the multi-carrier-frequency positioning signals is greater than a second specific number of symbols and/or slots.

It is to be understood that, for the number of carrier frequencies supported by the terminal device for sending the positioning signals in a non-simultaneous manner, the non-simultaneous sending may be that the time domain interval between the positioning signals on the plurality of carrier frequencies, that are supported for sending, is greater than the second specific number of symbols and/or slots.

It is to be understood that, for the second carrier frequency set supported by the terminal device for sending the positioning signals in a non-simultaneous manner, the non-simultaneous sending may be that the time domain interval between the positioning signals on the plurality of carrier frequencies in the second carrier frequency set, that is supported for sending, is greater than the second specific number of symbols and/or slots.

In some embodiments, the positioning capability information includes the second specific number.

The second specific number may be set as needed, which is not specifically limited in the embodiments of the present disclosure.

In an embodiment of the present disclosure, the first specific number may be equal to the second specific number.

In some embodiments, the network device includes a core network device and/or an access network device.

The core network device in the present disclosure may include a location management function network element. Optionally, the location management function network element includes a location server. The location server may be implemented as any one of the followings: a location management function (LMF), an enhanced serving mobile location centre (E-SMLC), secure user plane location (SUPL), and a SUPL location platform (SUPL SLP).

In the above embodiments provided by the present disclosure, the methods provided by the embodiments of the present disclosure are introduced respectively from the perspective of the terminal devices and the network devices. In order to achieve various functions of the methods provided by the above embodiments of the present disclosure, the network devices and the terminal devices may include hardware structures and software modules, and various functions are achieved in a form of the hardware structures, the software modules, or the hardware structures plus the software modules. A certain function of the above functions may be executed by the hardware structures, the software modules, or the hardware structures plus the software modules.

Referring to FIG. 4, it is a schematic structural diagram of a communication apparatus 1 provided by an embodiment of the present application. The communication apparatus 1 shown in FIG. 4 may include a transceiving module 11 and a processing module. The transceiving module 11 may include a sending module and/or a receiving module; the sending module is used for achieving a sending function; the receiving module is used for achieving a receiving function; and the transceiving module 11 may achieve the sending function and/or the receiving function.

The communication apparatus 1 may be a terminal device (such as a first terminal device in the aforementioned method embodiments), may also be an apparatus in the terminal device, and may further be an apparatus that can be used matching with the terminal device. Alternatively, the communication apparatus 1 may be a network device, may also be an apparatus in the network device, and may further be an apparatus that can be used matching with a network device.

The communication apparatus 1 is the terminal device 1. The transceiving module 11 is configured to send positioning capability information to a network device. The positioning capability information is configured to indicate capability information about transmitting multi-carrier-frequency positioning signals.

In some embodiments, the positioning capability information includes at least one of:
capability information about receiving the multi-carrier-frequency positioning signals by the terminal device; or
capability information of a multi-carrier-frequency positioning signal sent by terminal device.

In some embodiments, the capability information about receiving the multi-carrier-frequency positioning signals by the terminal device and/or the capability information about sending the multi-carrier-frequency positioning signals by the terminal device includes at least one of:
a number of receivers and/or senders of the terminal device;
a carrier frequency and/or a bandwidth of a receiving filter and/or a sending filter of the terminal device;
a number of carrier frequencies supported by the terminal device for receiving and/or sending the positioning signals in a simultaneous manner;
a number of carrier frequencies supported by the terminal device for receiving and/or sending the positioning signals in a non-simultaneous manner;
a first carrier frequency set supported by the terminal device for receiving and/or sending the positioning signals in a simultaneous manner;
a second carrier frequency set supported by the terminal device for receiving and/or sending the positioning signals in a non-simultaneous manner;
a number of carrier frequencies supported by the terminal device to be configured for receiving and/or sending the positioning signals; or
a third carrier frequency set supported by the terminal device to be configured for receiving and/or sending the positioning signals.

In some embodiments, the first carrier frequency set or the third carrier frequency set includes:
a maximum set of at least one carrier frequency combination supportable by the terminal device; or
at least one carrier frequency combination supportable by the terminal device.

In some embodiments, the second carrier frequency set includes:
a maximum set of at least one carrier frequency combination not supportable by the terminal device; or
at least one carrier frequency combination not supportable by the terminal device.

In some embodiments, the simultaneous manner is that there is at least one overlapping symbol and/or slot between positioning signals on a plurality of carrier frequencies for the multi-carrier-frequency positioning signals in a time domain, or that a time domain interval between positioning signals on a plurality of carrier frequencies for the multi-carrier-frequency positioning signals is smaller than a first specific number of symbols and/or slots.

In some embodiments, the positioning capability information includes the first specific number.

In some embodiments, the non-simultaneous manner is that a time domain interval between positioning signals on a plurality of carrier frequencies for the multi-carrier-frequency positioning signals is greater than a second specific number of symbols and/or slots.

In some embodiments, the positioning capability information includes the second specific number.

In some embodiments, the positioning signals include a positioning reference signal PRS, a sounding reference signal SRS, or other signals for positioning.

In some embodiments, the network device includes a core network device and/or an access network device.

The communication apparatus 1 is the network device. The transceiving module 11 is configured to receive positioning capability information sent by the terminal device. The positioning capability information is configured to indicate capability information about transmitting multi-carrier-frequency positioning signals.

In some embodiments, the positioning capability information includes at least one of:
capability information about receiving the multi-carrier-frequency positioning signals by the terminal device; or
capability information about sending the multi-carrier-frequency positioning signals by the terminal device.

In some embodiments, the capability information about receiving the multi-carrier-frequency positioning signals by the terminal device and/or the capability information about sending the multi-carrier-frequency positioning signals by the terminal device includes at least one of:
a number of receivers and/or senders of the terminal device;
a carrier frequency and/or a bandwidth of a receiving filter and/or a sending filter of the terminal device;
a number of carrier frequencies supported by the terminal device for receiving and/or sending the positioning signals in a simultaneous manner;
a number of carrier frequencies supported by the terminal device for receiving and/or sending the positioning signals in a non-simultaneous manner;
a first carrier frequency set supported by the terminal device for receiving and/or sending the positioning signals in a simultaneous manner;
a second carrier frequency set supported by the terminal device for receiving and/or sending the positioning signals in a non-simultaneous manner;
a number of carrier frequencies supported by the terminal device to be configured for receiving and/or sending the positioning signals; or
a third carrier frequency set supported by the terminal device to be configured for receiving and/or sending the positioning signals.

In some embodiments, the first carrier frequency set or the third carrier frequency set includes:
a maximum set of at least one carrier frequency combination supportable by the terminal device; or
at least one carrier frequency combination supportable by the terminal device.

In some embodiments, the second carrier frequency set includes:
a maximum set of at least one carrier frequency combination not supportable by the terminal device; or
at least one carrier frequency combination not supportable by the terminal device.

In some embodiments, the simultaneous manner is that there is at least one overlapping symbol and/or slot between positioning signals on a plurality of carrier frequencies for the multi-carrier-frequency positioning signals in a time domain, or that a time domain interval between positioning signals on a plurality of carrier frequencies for the multi-carrier-frequency positioning signals is smaller than a first specific number of symbols and/or slots.

In some embodiments, the positioning capability information includes the first specific number,

In some embodiments, the non-simultaneous manner is that a time domain interval between positioning signals on a plurality of carrier frequencies for the multi-carrier-frequency positioning signals is greater than a second specific number of symbols and/or slots.

In some embodiments, the positioning capability information includes the second specific number,

In some embodiments, the positioning signals include a positioning reference signal PRS, a sounding reference signal SRS, or other signals for positioning.

In some embodiments, the network device includes a core network device and/or an access network device.

For the communication apparatus 1 in the above embodiments, a specific manner of each module in the apparatus performing an operation is already described in the related method embodiments in detail, and is no longer described herein in detail.

The communication apparatus 1 provided in any one of the above embodiments of the present disclosure has the same or similar beneficial effects as the communication method provided in some of the above embodiments, which will not be repeated here.

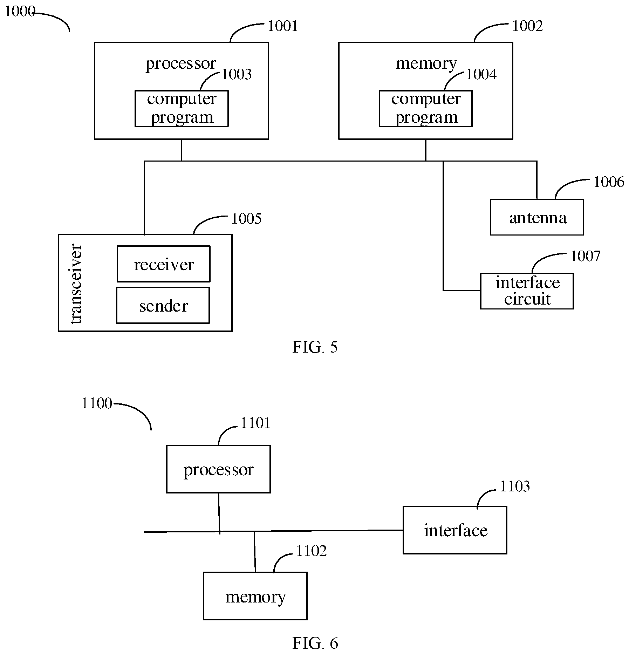

Referring to FIG. 5, FIG. 5 is a schematic structural diagram of another communication apparatus 1000 provided by an embodiment of the present disclosure. The communication apparatus 1000 may be a network device, may be a terminal device, may be a chip, a chip system, a processor or the like that supports the network device to implement the above method, and may also be a chip, chip system, processor or the like that supports the terminal device to implement the above method. The communication apparatus 1000 may be used for implementing the method described in any one of the above method embodiments, which may specifically refer to the instructions in the embodiments of the above methods.

The communication apparatus 1000 may be a network device, may be a terminal device, may be a chip, a chip system, a processor or the like that supports the network device to implement the above method, and may also be a chip, chip system, processor or the like that supports the terminal device to implement the above method. The apparatus may be used for implementing the method described in any one of the above method embodiments, which may specifically refer to the instructions in the embodiments of the above methods.

The communication apparatus 1000 may include one or more processors 1001. The processor 1001 may be a general-purpose processor or a dedicated processor, for example, may be a baseband processor or a central processor. The baseband processor may be used for processing a communication protocol and communication data. The central processor may be used for controlling the communication apparatus (such as a base station, a baseband chip, the terminal device, a terminal device chip, DU or CU, etc.), executing a computer program, and processing computer program data.

Optionally, the communication apparatus 1000 may further include one or more memories 1002, on which a computer program 1004 may be stored; and the processor 1002 executes the computer program 1004, to enable the communication apparatus 1000 to implement the methods described in the above method embodiments. Optionally, the memory 1002 may also store data therein. The communication apparatus 1000 and the memory 1002 may be set separately or integrated together.

Optionally, the communication apparatus 1000 may further include a transceiver 1005 and an antenna 1006. The transceiver 1005 may be called a transceiver unit, a transceiving machine, or a transceiver circuit, etc., for achieving a transceiver function. The transceiver 1005 may include a receiving machine and a sending machine. The receiving machine may be called a receiver or a receiving circuit, etc., for achieving a receiving function; and the sending machine may be called a sender or a sending circuit, etc., for achieving a sending function.

Optionally, the communication apparatus 1000 may further include one or more interface circuits 1007. The interface circuit 1007 is configured to receive a code instruction and transmitting the code instruction to the processor 1001. The processor 1001 operates the code instruction, to enable the communication apparatus 1000 to implement the method described in any one of the method embodiments.

The communication apparatus 1000 is the terminal device, and the transceiver 1005 is configured to perform S21 in FIG. 2.

The communication apparatus 1000 is the network device, and the transceiver 1005 is configured to perform S31 in FIG. 3.

In one implementation, the processor 1001 may include a transceiver for the receiving and sending functions. For example, the transceiver may be the transceiver circuit, or an interface, or the interface circuit. The transceiver circuit, the interface or the interface circuit used for achieving the receiving and sending functions may be separated or integrated together. The above transceiver circuit, interface or interface circuit may be used for code/data reading and writing, or the above transceiver circuit, interface or interface circuit may be used for signal transmission or transfer.

In one implementation, the processor 1001 may have a computer program 1003, and the computer program 1003 operates on the processor 1001, which enables the communication apparatus 1000 to perform the method described in any one of the above method embodiments. The computer program 1003 may be solidified in the processor 1001. In this case, the processor 1001 may be implemented by hardware.

In one implementation, the communication apparatus 1000 may include a circuit capable of achieving the transmitting, receiving or communication function in the forgoing method embodiments. The processor and the transceiver described in the present disclosure may be implemented on an integrated circuit (IC), an analog IC, a radio frequency integrated circuit (RFIC), a mixed-signal IC, an application specific integrated circuit (ASIC), a printed circuit board (PCB), an electronic device, etc. The processor and the transceiver may also be fabricated using various IC technologies, such as a complementary metal oxide semiconductor (CMOS), an nMetal-Oxide-Semiconductor (NMOS), a positive channel metal oxide semiconductor (PMOS), a bipolar junction transistor (BJT), a bipolar CMOS (BiCMOS), SiGe, GaAs, etc.

The communication apparatus described in each of the above embodiments may be a terminal device, but the scope of the communication apparatus described in the present disclosure is not limited thereto; and moreover, the structure of the communication apparatus may not be limited by FIG. 5. The communication apparatus may be an independent device or a part of a larger device. For example, the communication apparatus may be:
(1) an independent integrated circuit IC, or the chip, or, a chip system or a subsystem;
(2) a collection of one or more ICs, optionally, the IC collection may further include a storage component for storing data and the computer program;
(3) an ASIC, such as a modem;
(4) modules that may be embedded in other devices;
(5) the receiving machine, the terminal device, an intelligent terminal device, a cellular telephone, a wireless device, a handset, a mobile unit, a vehicle device, the network device, a cloud device, an artificial intelligence device, etc.; and
(6) other devices, etc.

In a case that the communication apparatus may be the chip or the chip system, referring to FIG. 6, it is a schematic structural diagram of a chip provided to by an embodiment of the present disclosure.

The chip 1100 includes a processor 1101 and an interface 1103. There may be one or more processors 1101 and a plurality of interfaces 1103.

In a case that the chip is used for achieving the functions of the terminal device in any one of the embodiments of the present disclosure:
the interface 1103, configured to receive a code instruction and transmit the code instruction to the processor; and
a processor 1101, configured to run the code instruction to implement the method for determining the multi-carrier-frequency carrier phase positioning capability as described in some of the above embodiments.

In a case that the chip is used for achieving the functions of the network device in any one of the embodiments of the present disclosure:
the interface 1103, configured to receive a code instruction and transmit the code instruction to the processor; and
a processor 1101, configured to run the code instruction to implement the method for determining the multi-carrier-frequency carrier phase positioning capability as described in some of the above embodiments.

Optionally, the chip 1100 further includes a memory 1102, configured to store necessary computer programs and data.

Those skilled in the art may further learn that various illustrative logical blocks and steps listed in the embodiments of the present disclosure may be implemented through electronic hardware, computer software, or a combination of the two. Whether such function is implemented through the hardware or the software depends on particular application and design requirements for the entire system. Those skilled in the art may use various methods to implement the described functions for each particular application, but such implementation should not be considered to be beyond the scope of the embodiments of the present disclosure.

The embodiments of the present disclosure further provides a communication system, including a communication apparatus as a terminal device and a communication apparatus as a network device in the foregoing embodiment in FIG. 4, or including a communication apparatus as a terminal device and a communication apparatus as a network device in the foregoing embodiment in FIG. 5.

The present disclosure further provides a readable storage medium, in which instructions are stored; and when the instructions are executed by the computer, the functions in any one of the above method embodiments are achieved.

The present disclosure further provides a computer program product, which, when being executed by the computer, implements the functions in any one of the above method embodiments.

In the above embodiments, the functions may be achieved, in whole or in part, by software, hardware, firmware, or any combination thereof. When being achieved by software, the functions may be achieved, in whole or in part, in a form of the computer program product. The computer program product includes one or more computer program products. The flows or functions according to the embodiments of the present disclosure are generated in whole or in part when the computer programs are loaded or executed on the computer. The computer may be a general computer, a special computer, a computer network or other programmable devices. The computer program may be stored in the computer readable storage medium, or transmitted from one computer readable storage medium to another computer readable storage medium. For example, the computer program may be transmitted from a website site, the computer, a server or a data center to another website site, computer, server or data center in a wired (such as a coaxial cable, an optical fiber, and a digital subscriber line (DSL)) or wireless (such as infrared, wireless, microwave, etc.) way. The computer readable storage medium may be any available medium that the computer can access or a data storage device including a server, a data center and the like integrated with one or more available media. The available medium may be a magnetic medium (for example, a floppy disk, a hard disk, and a tape), an optical medium (for example, a high-density digital video disc (DVD)), or a semiconductor medium (for example, a solid state disk (SSD)), etc.

Those of ordinary skill in the art may understand that first, second, and other digital numbers of the present disclosure are only a convenient distinction for description, and are not used to limit the scope of the embodiments of the present disclosure, but also indicate an order.

At least one in the present disclosure may further be described as one or more; and a plurality of may be two, three, four or more, which will not be limited in the present disclosure. In the embodiments of the present disclosure, for a kind of technical feature, the technical features in such technical feature are distinguished by "first", "second", "third", "A", "B", "C", and "D". The technical features described by "first", "second", "third", "A", "B", "C", and "D" have no order or size order.

Correspondences shown in various tables in the present disclosure may be configured or predefined. A value of information in each table is only an example, and may be configured as other values, which will not be limited in the present disclosure. During configuration of correspondences between the information and various parameters, it is not necessarily required to configure all the correspondences shown in various tables. For example, in the tables in the present disclosure, the correspondences shown in some rows may also not be configured. For another example, appropriate deformation adjustments may be made based on the above tables, such as splitting, merging, etc. Titles in the above tables indicate that names of the parameters may also use other names comprehensible by the communication apparatus, and values or representations of the parameters may also use other values or representations comprehensible by the communication apparatus. In implementation of the above tables, other data structures may also be used, such as arrays, queues, containers, stacks, linear tables, pointers, linked lists, trees, graphs, structures, classes, heaps, hash tables or hash tables.

Predefinition in the present disclosure may be understood as definition, predefinition, storage, pre-storage, pre-negotiation, pre-configuration, curing, or pre-burning.

Those of ordinary skill in the art may appreciate that units and algorithm steps of various examples described in combination with the embodiments of the present disclosure herein can be implemented by combination of electronic hardware, or computer software and electronic hardware. Whether these functions are executed in hardware or software manner depends on the particular application and design constraints of the technical solutions. Professionals may use different methods to implement the described functions for each particular application, but such implementation should not be considered to be beyond the scope of the present disclosure.

It will be apparent to those skilled in the art that the specific operation of the described system, apparatus, and unit may be referred to the corresponding process in the aforementioned method embodiments for the sake of convenience and conciseness of the description and will not be described again here.

The foregoing is only particular implementation of the present disclosure, but the scope of protection of the present disclosure is not limited thereto. All changes or replacements made by any those skilled in the art within the technical scope of the present disclosure should fall within the scope of protection of the present disclosure. Therefore, the scope of protection of the present disclosure should be subject to the scope of protection of the appended claims.

## Claims

1. A method for determining a multi-carrier-frequency carrier phase positioning capability, performed by a terminal device, comprising:
sending positioning capability information to a network device, wherein the positioning capability information is configured to indicate capability information about transmitting multi-carrier-frequency positioning signals.

2. The method according to claim 1, wherein the positioning capability information comprises at least one of:
capability information about receiving the multi-carrier-frequency positioning signals by the terminal device; or
capability information about sending the multi-carrier-frequency positioning signals by the terminal device.

3. The method according to claim 2, wherein the capability information about receiving the multi-carrier-frequency positioning signals by the terminal device and/or the capability information about sending the multi-carrier-frequency positioning signals by the terminal device comprises at least one of:
a number of receivers and/or senders of the terminal device;
a carrier frequency and/or a bandwidth of a receiving filter and/or a sending filter of the terminal device;
a number of carrier frequencies supported by the terminal device for receiving and/or sending the positioning signals in a simultaneous manner;
a number of carrier frequencies supported by the terminal device for receiving and/or sending the positioning signals in a non-simultaneous manner;
a first carrier frequency set supported by the terminal device for receiving and/or sending the positioning signals in a simultaneous manner;
a second carrier frequency set supported by the terminal device for receiving and/or sending the positioning signals in a non-simultaneous manner;
a number of carrier frequencies supported by the terminal device to be configured for receiving and/or sending the positioning signals; or
a third carrier frequency set supported by the terminal device to be configured for receiving and/or sending the positioning signals.

4. The method according to claim 3, wherein the first carrier frequency set or the third carrier frequency set comprises:
a maximum set of at least one carrier frequency combination supportable by the terminal device; or
at least one carrier frequency combination supportable by the terminal device.

5. The method according to claim 3, wherein the second carrier frequency set comprises:
a maximum set of at least one carrier frequency combination not supportable by the terminal device; or
at least one carrier frequency combination not supportable by the terminal device.

6. The method according to any one of claims 3-5, wherein the simultaneous manner is that there is at least one overlapping symbol and/or slot between positioning signals on a plurality of carrier frequencies for the multi-carrier-frequency positioning signals in a time domain, or that a time domain interval between positioning signals on a plurality of carrier frequencies for the multi-carrier-frequency positioning signals is smaller than a first specific number of symbols and/or slots.

7. The method according to claim 6, wherein the positioning capability information comprises the first specific number.

8. The method according to any one of claims 3-7, wherein the non-simultaneous manner is that a time domain interval between positioning signals on a plurality of carrier frequencies for the multi-carrier-frequency positioning signals is greater than a second specific number of symbols and/or slots.

9. The method according to claim 8, wherein the positioning capability information comprises the second specific number.

10. The method according to any one of claims 1-9, wherein the positioning signals comprise a positioning reference signal (PRS), a sounding reference signal (SRS), or other signals for positioning.

11. A method for determining a multi-carrier-frequency carrier phase positioning capability, performed by a network device, comprising:
receiving positioning capability information sent by a terminal device, wherein the positioning capability information is configured to indicate capability information about transmitting multi-carrier-frequency positioning signals.

12. The method according to claim 11, wherein the positioning capability information comprises at least one of:
capability information about receiving the multi-carrier-frequency positioning signals by the terminal device; or
capability information about sending the multi-carrier-frequency positioning signals by the terminal device.

13. The method according to claim 12, wherein the capability information about receiving the multi-carrier-frequency positioning signals by the terminal device and/or the capability information about sending the multi-carrier-frequency positioning signals by the terminal device comprises at least one of:
a number of receivers and/or senders of the terminal device;
a carrier frequency and/or a bandwidth of a receiving filter and/or a sending filter of the terminal device;
a number of carrier frequencies supported by the terminal device for receiving and/or sending the positioning signals in a simultaneous manner;
a number of carrier frequencies supported by the terminal device for receiving and/or sending the positioning signals in a non-simultaneous manner;
a first carrier frequency set supported by the terminal device for receiving and/or sending the positioning signals in a simultaneous manner;
a second carrier frequency set supported by the terminal device for receiving and/or sending the positioning signals in a non-simultaneous manner;
a number of carrier frequencies supported by the terminal device to be configured for receiving and/or sending the positioning signals; or
a third carrier frequency set supported by the terminal device to be configured for receiving and/or sending the positioning signals.

14. The method according to claim 13, wherein the first carrier frequency set or the third carrier frequency set comprises:
a maximum set of at least one carrier frequency combination supportable by the terminal device; or
at least one carrier frequency combination supportable by the terminal device.

15. The method according to claim 13, wherein the second carrier frequency set comprises:
a maximum set of at least one carrier frequency combination not supportable by the terminal device; or
at least one carrier frequency combination not supportable by the terminal device.

16. The method according to any one of claims 13-15, wherein the simultaneous manner is that there is at least one overlapping symbol and/or slot between positioning signals on a plurality of carrier frequencies for the multi-carrier-frequency positioning signals in a time domain, or that a time domain interval between positioning signals on a plurality of carrier frequencies for the multi-carrier-frequency positioning signals is smaller than a first specific number of symbols and/or slots.

17. The method according to claim 16, wherein the positioning capability information comprises the first specific number.

18. The method according to any one of claims 13-17, wherein the non-simultaneous manner is that a time domain interval between positioning signals on a plurality of carrier frequencies for the multi-carrier-frequency positioning signals is greater than a second specific number of symbols and/or slots.

19. The method according to claim 18, wherein the positioning capability information comprises the second specific number.

20. The method according to any one of claims 11-19, wherein the positioning signals comprise a positioning reference signal (PRS), a sounding reference signal (SRS), or other signals for positioning.

21. A communication apparatus, comprising
a transceiving module, configured to send positioning capability information to a network device, wherein the positioning capability information is configured to indicate capability information about transmitting multi-carrier-frequency positioning signals.

22. A communication apparatus, comprising
a transceiving module, configured to receive positioning capability information sent by a terminal device, wherein the positioning capability information is configured to indicate capability information about transmitting multi-carrier-frequency positioning signals.

23. A communication apparatus, comprising a processor and a memory, wherein the memory stores a computer program therein; and the processor executes the computer program stored in the memory, to enable the apparatus to implement the method according to any one of claims 1-10, or the processor executes the computer program stored in the memory, to enable the apparatus to implement the method according to any one of claims 11-20.

24. A communication apparatus, comprising a processor and an interface circuit, wherein
the interface circuit is configured to receive a code instruction and transmit the code instruction to the processor; and
the processor is configured to run the code instruction to implement the method according to any one of claims 1-10, or to run the code instruction to implement the method according to any one of claims 11-20.

25. A computer readable storage medium storing instructions that, when being executed, implement the method according to any one of claims 1-10, or implement the method according to any one of claims 11-20.
